# EUROPÄISCHE PATENTSCHRIFT

(11) **EP 3 914 661 B1**
(45) Veröffentlichungstag und Bekanntmachung des Hinweises auf die Patenterteilung: **08.05.2024**
(21) Anmeldenummer: 20701324.4
(22) Anmeldetag: 21.01.2020
(51) Int. Cl.: C09J 7/10, C09J 7/38, C09J 5/04, C09J 4/06, C09J 133/06

(54) **REAKTIVES 2-KOMPONENTENKLEBESYSTEM IN FILMFORM AUF BASIS VON GERUCHSNEUTRALEN ACRYLMONOMEREN**
REACTIVE 2-COMPONENT ADHESIVE SYSTEM IN FILM FORM BASED ON ODOR-NEUTRAL ACRYLIC MONOMERS
SYSTÈME DE COLLE À DEUX COMPOSANTS RÉACTIFS SOUS FORME DE FILM À BASE DE MONOMÈRES ACRYLIQUES INODORES

(30) Priorität: 22.01.2019 DE 102019200736
(43) Veröffentlichungstag der Anmeldung: 01.12.2021
(73) Patentinhaber: tesa SE, 22848 Norderstedt (DE)
(72) Erfinder: SCHÜMANN, Uwe, 25421 Pinneberg (DE); DIETZE, Sebastian, 24568 Kaltenkirchen (DE); KEITE-TELGENBÜSCHER, Klaus, 22529 Hamburg (DE); ESCOFFIER, Alexandre, 69003 Lyon (FR); JANUSKO-MANDIN, Zoé, 69260 Charbonnières-les-Bains (FR)
(86) Internationale Anmeldenummer: PCT/EP2020/051382
(87) Internationale Veröffentlichungsnummer: WO 2020/152147

(56) Entgegenhaltungen:
- WO-A1-2014/202402
- Specialchem: , 18. Dezember 2017 (2017-12-18), XP002798582, Gefunden im Internet: URL:https://coatings.specialchem.com/produ ct/m-sartomer-arkema-group-sartomer-sr411 [gefunden am 2020-04-02]

## Beschreibung

### Technisches Gebiet der Erfindung

Die vorliegende Erfindung betrifft ein 2-Komponentenklebesystem in Filmform auf Basis von Acrylmonomeren mit geringem Eigengeruch zur Verklebung von diversen Materialien, wie z.B. Kunststoff, Metall, Glas und/oder Holz. Dieses 2-Komponentenklebesystem umfasst zwei reaktive Klebstofffilme, die jeweils (a) eine polymere Filmbildner-Matrix und (b) mindestens ein reaktives Monomer umfassen, wobei der erste Klebstofffilm zusätzlich mindestens einen Radikalinitiator enthält und der zweite Klebstofffilm zusätzlich mindestens einen Aktivator enthält. Außerdem wird ein Verfahren zur Herstellung der erfindungsgemäßen reaktiven Klebstofffilme, wie oben beschrieben und ein Kit zur Bereitstellung des erfindungsgemäßen, reaktiven Klebstofffilm-Systems, umfassend einen ersten und einen zweiten reaktiven Klebstofffilm, wie oben beschrieben, zur Verfügung gestellt.

### Allgemeiner Stand der Technik

2-Komponentenklebesysteme auf Basis von Acrylmonomeren sind allgemein seit Jahren bekannt und in der Fachliteratur eingehend beschrieben. In diesen radikalisch polymerisierenden Systemen wird ein aus zwei Komponenten bestehendes KlebstoffSystem auf die zu verklebenden Teile aufgetragen, wobei üblicherweise zwei flüssige Komponenten zum Einsatz kommen. Beispielsweise bestehen die eine Komponente aus den zu polymerisierenden Monomeren und einem Aktivator und die andere Komponente aus einer radikalbildenden Substanz (auch Härter oder Initiator genannt) und den zu polymerisierenden Monomeren. Nach Durchmischen oder zumindest Kontaktieren der beiden Komponenten entsteht durch chemische Reaktion des Aktivators mit der radikalbildenden Substanz mindestens ein Radikal und die Polymerisationsreaktion der zu polymerisierenden Monomere beginnt. Die Radikalkettenpolymerisation des Monomers findet anschließend bis zu einem Kettenabbruch statt und die Klebemasse härtet somit aus, wodurch eine dauerhafte Verklebung der zu verklebenden Teile erreicht wird.

Nachteil derartiger flüssiger 2-Komponenten-Polymerisations-Klebesysteme ist, dass ihre Anwendung oft unsauber erfolgt, da die beiden Komponenten meist flüssig bis pastös auf die zu verklebenden Teile aufgetragen werden müssen. Dies ist sowohl bei sehr kleinen und schmalen als auch bei großflächigen Verklebungen und/oder bei solchen Anwendungen problematisch, bei denen die Oberflächen uneben, z.B. geneigt, sind.

In Form von haftklebrigen Filmen (Klebebändern) sind 2-Komponentenklebesysteme auf Basis von Acrylmonomeren ebenfalls bekannt. Sie werden beispielsweise beschrieben in EP0300847A1, EP3010989A1, EP3063243A1, WO2018104053A1, EP3328951A1 sowie in WO2017102282A1. Ein wesentlicher Nachteil dieser Filme ist, dass sie wie auch die flüssigen 2-Komponenten-Polymerisations-Klebesysteme vor der Aushärtung stark und unangenehm riechen, was die Verwendungsmöglichkeiten und die Akzeptanz erheblich einschränkt. Wegen der großen offenen Oberflächen ist dies bei Klebebändern noch problematischer als bei Flüssigklebstoffen, die üblicherweise in Tuben, Kartuschen oder sonstigen verschlossenen Gebinden dargereicht werden, so dass deren Geruch nur während der Applikation nach außen dringt.

### Aufgabe der vorliegenden Erfindung

Der vorliegenden Erfindung liegt insofern die Aufgabe zu Grunde, ein hinsichtlich des Geruchs verbessertes, reaktives 2-Komponentenklebesystem auf Basis von Acrylmonomeren in Form von Filmen bereitzustellen, mit dem hohe Verklebungsfestigkeiten erzielt werden können.

Es soll einfach zu handhaben sein und die Filme sollen eine Haftklebrigkeit aufweisen, so dass es zu keinem Verrutschen während der Applikation auf den zu verklebenden Substraten kommt und eine exaktere Verklebung als bei den flüssigen 2-Komponenten-Polymerisationsklebesystemen, die im Stand der Technik bekannt sind, ermöglicht wird.

### Lösung der Aufgabe

Gelöst wird diese Aufgabe durch ein reaktives Klebstofffilm-System, umfassend zwei reaktive Klebstofffilme gemäß Hauptanspruch, wobei der erste Klebstofffilm (a) eine polymere Filmbildner-Matrix, (b) mindestens ein erfindungsgemäß ausgewähltes reaktives Monomer und (c) mindestens einen Initiator, insbesondere Radikalinitiator umfasst und der zweite Klebstofffilm (a) eine polymere Filmbildner-Matrix, (b) mindestens ein erfindungsgemäß ausgewähltes reaktives Monomer und (c) mindestens einen Aktivator umfasst.

Danach betrifft die Erfindung ein reaktives Klebstofffilm-System, umfassend zwei reaktive Klebstofffilme, wobei der erste Klebstofffilm (a) eine polymere Filmbildner-Matrix, (b) ein oder mehrere reaktive Monomere (M₍₁₎-M₍ₙ₎) und (c) ein Reagens, ausgewählt aus einem Initiator, insbesondere Radikalinitiator umfasst, dadurch gekennzeichnet, dass
das eine oder die mehreren reaktiven Monomere (M₍₁₎-M₍ₙ₎) ausgewählt sind aus den Gruppen (b1) bis (b4), die jeweils wie folgt definiert sind:
(b1):
   4-Acryloylmorpholin (CAS-Nr.: 5117-12-4), 4-Methacryloylmorpholin (CAS-Nr.: 5117-13-5), 2-Hydroxy-3-phenoxy-propylacrylat (CAS-Nr.: 16969-10-1), 2-Hydroxy-3-phenoxy-propylmethacrylat (CAS-Nr.: 16926-87-7), (5-Ethyl-1,3-dioxan-5-yl)methylacrylat (CAS-Nr.: 66492-51-1);
(b2):
   3,3,5-Trimethylcyclohexylmethacrylat (CAS-Nr.: 7779-31-9), 4-(1,1-dimethylethyl)cyclohexylmethacrylat (CAS-Nr.: 46729-07-1);
(b3):
   ein Poly(ethylenglykol)phenylethermethacrylat der allgemeinen Formel (I): 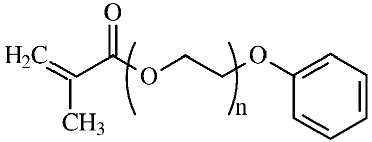 wobei n= 2 bis 10 ist;
   ein an der Phenylgruppe einfach oder mehrfach alkylsubstituiertes Poly(ethylenglykol)phenylethermethacrylat der allgemeinen Formel (II): 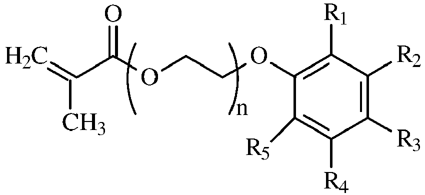 wobei n= 2 bis 10 ist; und R₁, R₂, R₃, R₄, R₅ unabhängig voneinander H oder C₁-C₁₄- Alkyl darstellen;
(b4):
   ein Poly(ethylenglykol)phenyletheracrylat der allgemeinen Formel (III): 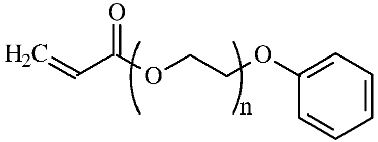 wobei n= 2 bis 10 ist;
   ein an der Phenylgruppe einfach oder mehrfach alkylsubstituiertes Poly(ethylenglykol)phenyletheracrylat der allgemeinen Formel (IV): 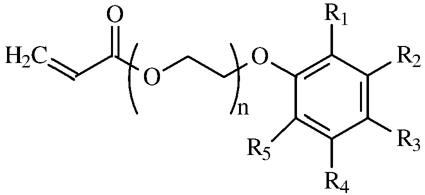 wobei n= 2 bis 10 ist; und R₁, R₂, R₃, R₄, R₅ unabhängig voneinander H oder C₁-C₁₄- Alkyl darstellen;
   und der Gesamtanteil des einen oder der mehreren reaktiven Monomere (M₍₁₎-M₍ₙ₎) ausgewählt aus den Gruppen (b1) bis (b4) an allen in dem reaktiven Klebstofffilm enthaltenen reaktiven Monomeren mindestens 50 Gewichtsprozente beträgt;
   und der zweite Klebstofffilm (a) eine polymere Filmbildner-Matrix, (b) ein oder mehrere reaktive Monomere (M₍₁₎-M₍ₙ₎) und (c) ein Reagens, ausgewählt aus einem Aktivator umfasst, dadurch gekennzeichnet, dass
   das eine oder die mehreren reaktiven Monomere (M₍₁₎-M₍ₙ₎) ausgewählt sind aus den Gruppen (b1) bis (b4):
(b1):
   4-Acryloylmorpholin (CAS-Nr.: 5117-12-4), 4-Methacryloylmorpholin (CAS-Nr.: 5117-13-5), 2-Hydroxy-3-phenoxy-propylacrylat (CAS-Nr.: 16969-10-1), 2-Hydroxy-3-phenoxy-propylmethacrylat (CAS-Nr.: 16926-87-7), (5-Ethyl-1,3-dioxan-5-yl)methylacrylat (CAS-Nr.: 66492-51-1);
(b2):
   3,3,5-Trimethylcyclohexylmethacrylat (CAS-Nr.: 7779-31-9), 4-(1,1-dimethylethyl)cyclohexylmethacrylat (CAS-Nr.: 46729-07-1);
(b3):
   ein Poly(ethylenglykol)phenylethermethacrylat der allgemeinen Formel (I): 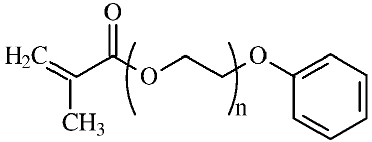 wobei n= 2 bis 10 ist;
   ein an der Phenylgruppe einfach oder mehrfach alkylsubstituiertes Poly(ethylenglykol)phenylethermethacrylat der allgemeinen Formel (II): 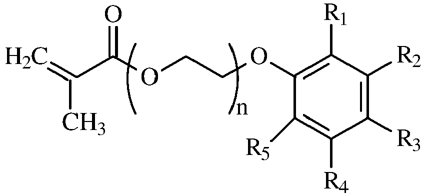 wobei n= 2 bis 10 ist; und R₁, R₂, R₃, R₄, R₅ unabhängig voneinander H oder C₁-C₁₄- Alkyl darstellen;
(b4):
   ein Poly(ethylenglykol)phenyletheracrylat der allgemeinen Formel (III): 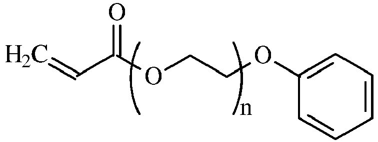 wobei n= 2 bis 10 ist;
   ein an der Phenylgruppe einfach oder mehrfach alkylsubstituiertes Poly(ethylenglykol)phenyletheracrylat der allgemeinen Formel (IV): 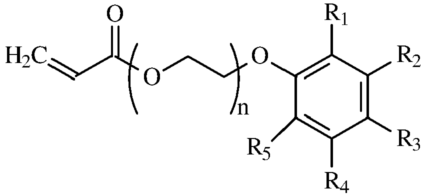 wobei n= 2 bis 10 ist; und R₁, R₂, R₃, R₄, R₅ unabhängig voneinander H oder C₁-C₁₄- Alkyl darstellen;
   und der Gesamtanteil des einen oder der mehreren reaktiven Monomere (M₍₁₎-M₍ₙ₎) ausgewählt aus den Gruppen (b1) bis (b4) an allen in dem reaktiven Klebstofffilm enthaltenen reaktiven Monomeren mindestens 50 Gewichtsprozente beträgt;
   und dadurch gekennzeichnet, dass die polymere Filmbildner-Matrix (a) ein thermoplastisches Polyurethan umfasst.

Gegenstand der Erfindung sind auch die jeweiligen Klebstofffilme an sich.

Gegenstand der Unteransprüche sind dabei vorteilhafte Weiterbildungen der reaktiven Klebstofffilme sowie des reaktiven Klebstofffilm-Systems, des Verfahrens zur Herstellung desselben sowie dessen Verwendungsmöglichkeiten.

### Detaillierte Beschreibung der Erfindung

Die oben beschriebene Aufgabe wird über ein reaktives Klebstofffilm-System gelöst, das zwei reaktive, haftklebrige Klebstofffilme auf Basis von erfindungsgemäß ausgewählten Acrylmonomeren umfasst. Dieses Klebstofffilm-System ist dadurch gekennzeichnet, dass der erste reaktive Klebstofffilm eine polymere Filmbildner-Matrix (a), mindestens ein erfindungsgemäß ausgewähltes reaktives Monomer (b) sowie einen Initiator, insbesondere Radikalinitiator (c) umfasst und der zweite reaktive Klebstofffilm eine polymere Filmbildner-Matrix (a), mindestens ein erfindungsgemäß ausgewähltes reaktives Monomer (b) sowie einen Aktivator (c) umfasst.

In einer erfindungsgemäßen Ausführungsform wird folglich ein reaktiver Klebstofffilm bereitgestellt, umfassend (a) eine polymere Filmbildner-Matrix, (b) mindestens ein erfindungsgemäß ausgewähltes reaktives Monomer und (c) ein Reagens, ausgewählt aus einem Initiator, insbesondere Radikalinitiator, oder einem Aktivator.

In einer weiteren erfindungsgemäßen Ausführungsform wird ein reaktives Klebstofffilm-System, umfassend zwei reaktive Klebstofffilme A und B bereitgestellt, das dadurch gekennzeichnet ist, dass der erste erfindungsgemäße reaktive Klebstofffilm A einen Initiator, insbesondere Radikalinitiator, enthält und der zweite erfindungsgemäße reaktive Klebstofffilm B einen Aktivator enthält.

In einer weiteren erfindungsgemäßen Ausführungsform wird ein Verfahren zur Herstellung eines erfindungsgemäßen, reaktiven Klebstofffilms offenbart, wobei das Verfahren die folgenden Schritte umfasst:
1. Auflösen und/oder Feinverteilen der Inhaltsstoffe in einem oder mehreren Lösemittel(n) und/oder Wasser,
2. Mischen der aufgelösten oder feinverteilten Inhaltsstoffe,
3. Beschichten eines Trennliners oder -papiers, eines Trägermaterials oder eines in Filmform vorliegenden Haftklebstoffs mit der Mischung aufgelöster oder verteilter Inhaltsstoffe nach Schritt 2,
4. Verdunsten des Lösemittels und/oder Wassers und
5. Gegebenenfalls Aufwickeln des reaktiven Klebstofffilms zu einer Rolle.
wobei die Inhaltsstoffe (a) eine polymere Filmbildner-Matrix, (b) mindestens ein erfindungsgemäß ausgewähltes reaktives Monomer und (c) ein Reagens, ausgewählt aus einem Initiator, insbesondere Radikalinitiator, oder einem Aktivator, umfassen.

Schritte 1. und 2. können auch in einem Schritt erfolgen, die Inhaltsstoffe also gleichzeitig aufgelöst und/oder feinverteilt werden.

In einer weiteren erfindungsgemäßen Ausführungsform wird ein Kit zur Bereitstellung eines Zweikomponenten-Klebstofffilm-Systems, umfassend (i) mindestens einen ersten erfindungsgemäßen reaktiven Klebstofffilm, der einen Initiator, insbesondere Radikalinitiator enthält, und (ii) mindestens einen zweiten erfindungsgemäßen reaktiven Klebstofffilm, der einen Aktivator enthält, offenbart.

In einer weiteren erfindungsgemäßen Ausführungsform wird ein Verbundkörper offenbart, der durch das erfindungsgemäße, reaktive Klebstofffilm-System oder durch das erfindungsgemäße Kit verbunden ist.

Nachfolgend werden die Komponenten der erfindungsgemäßen Klebstofffilme bzw. des erfindungsgemäßen Klebstofffilm-Systems im Detail beschrieben.

### Polymere Filmbildner-Matrix

Die erfindungsgemäßen reaktiven Klebstofffilme bestehen grundsätzlich aus einer Matrix, die nachfolgend polymere Filmbildner-Matrix genannt wird, in der die reaktiven, zu polymerisierenden Monomere enthalten sind. Aufgabe dieser Matrix ist ein inertes Grundgerüst für die reaktiven Monomere zu bilden, so dass diese nicht flüssig vorliegen und damit die genannten Probleme auslösen können, sondern in einem Film oder einer Folie eingelagert sind. Auf diese Art und Weise wird eine einfachere Handhabung gewährleistet.

Inert bedeutet in diesem Zusammenhang, dass die reaktiven Monomere unter geeignet gewählten Bedingungen (z. B. bei ausreichend geringen Temperaturen) im Wesentlichen nicht mit der polymeren Filmbildner-Matrix reagieren.

Die filmbildende Matrix umfasst thermoplastische Polyurethane, insbesondere semikristalline. Besonders bevorzugt sind thermoplastische Polymere mit einer kristallinen Schmelztemperatur von kleiner als 100°C und Erweichungstemperaturen von ebenfalls kleiner als 100°C. In diesem Zusammenhang steht der Begriff Erweichungspunkt für die Temperatur, ab der das thermoplastische Granulat mit sich selbst verklebt. Wenn es sich bei dem Bestandteil der polymeren Filmbildner-Matrix um ein semikristallines thermoplastisches Polymer handelt, dann weist es neben seiner Erweichungstemperatur (die mit dem Schmelzen der Kristallite zusammenhängt) sehr bevorzugt eine Glasübergangstemperatur von höchstens 25 °C, bevorzugt höchstens 0 °C, auf.

In der erfindungsgemäßen Ausführungsform wird ein thermoplastisches Polyurethan eingesetzt. Vorzugsweise besitzt das thermoplastische Polyurethan eine Erweichungstemperatur von kleiner als 100°C, insbesondere kleiner als 80°C.

In einer besonders bevorzugten, erfindungsgemäßen Ausführungsform wird Desmomelt^{®} 530 als polymere Filmbildner-Matrix eingesetzt, das im Handel bei der Covestro AG, 51373 Leverkusen, Deutschland, erhältlich ist. Desmomelt^{®} 530 ist ein hydroxyl-terminiertes, weitgehend lineares, thermoplastisches, stark kristallisierendes Polyurethan-Elastomer.

Die Menge der polymeren Filmbildner-Matrix liegt erfindungsgemäß im Bereich von etwa 10 bis 90 Gew.%, bevorzugt etwa 20 bis 50 Gew.%, bezogen auf die Gesamtmischung der Bestandteile eines der erfindungsgemäßen reaktiven Klebstofffilme. Stärker bevorzugt werden 25 bis 45 Gew.%, am stärksten bevorzugt etwa 30 bis 40 Gew.%, der polymeren Filmbildner-Matrix, bezogen auf die Gesamtmischung der Bestandteile eines der erfindungsgemäßen reaktiven Klebstofffilme, eingesetzt. Die Gesamtmischung der Bestandteile eines der erfindungsgemäßen reaktiven Klebstofffilme steht hier für die gesamte Menge der eingesetzten polymeren Filmbildner-Matrix (a), der reaktiven Monomere (b), des Reagens (c) sowie weiterer optional vorliegender Komponenten, die als Summe (in Gew.%) erhalten wird.

### Reaktives Monomer

Wie hierin verwendet, soll das reaktive Monomer für ein Monomer stehen, das insbesondere zu einer Radikalkettenpolymerisation in der Lage ist.

Erfindungsgemäß ist ein geeignetes, reaktives Monomer ausgewählt aus den folgenden Gruppen (b1) bis (b4):
(b1):
   4-Acryloylmorpholin (CAS-Nr.: 5117-12-4), 4-Methacryloylmorpholin (CAS-Nr.: 5117-13-5), 2-Hydroxy-3-phenoxy-propylacrylat (CAS-Nr.: 16969-10-1), 2-Hydroxy-3-phenoxy-propylmethacrylat (CAS-Nr.: 16926-87-7), (5-Ethyl-1,3-dioxan-5-yl)methylacrylat (CAS-Nr.: 66492-51-1);
(b2):
   3,3,5-Trimethylcyclohexylmethacrylat (CAS-Nr.: 7779-31-9), 4-(1,1-dimethylethyl)cyclohexylmethacrylat (CAS-Nr.: 46729-07-1);
(b3):
   ein Poly(ethylenglykol)phenylethermethacrylat der allgemeinen Formel (I): 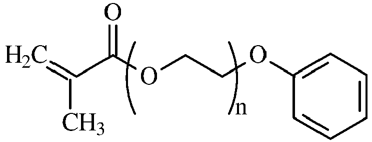 wobei n= 2 bis 10 ist;
   ein an der Phenylgruppe einfach oder mehrfach alkylsubstituiertes Poly(ethylenglykol)phenylethermethacrylat der allgemeinen Formel (II): 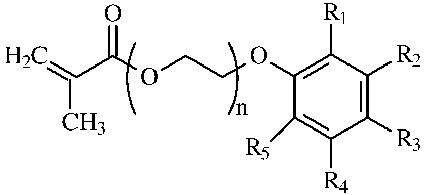 wobei n= 2 bis 10 ist; und R₁, R₂, R₃, R₄, R₅ unabhängig voneinander H oder C₁-C₁₄- Alkyl darstellen;
(b4):
   ein Poly(ethylenglykol)phenyletheracrylat der allgemeinen Formel (III): 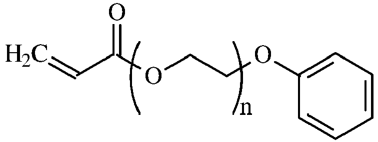 wobei n= 2 bis 10 ist;
   ein an der Phenylgruppe einfach oder mehrfach alkylsubstituiertes Poly(ethylenglykol)phenyletheracrylat der allgemeinen Formel (IV): 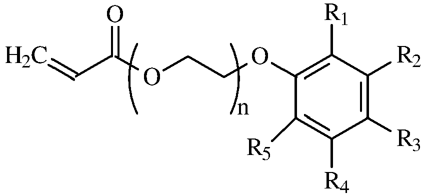 wobei n= 2 bis 10 ist; und R₁, R₂, R₃, R₄, R₅ unabhängig voneinander H oder C₁-C₁₄- Alkyl darstellen;

Erfindungsgemäß umfassen die reaktiven Klebstofffilme ein oder mehrere der erfindungsgemäß ausgewählten reaktiven Monomere (M₍₁₎-M₍ₙ₎) aus den Gruppen (b1) bis (b4).

Der Gesamtanteil des einen oder der mehreren reaktiven Monomere (M₍₁₎-M₍ₙ₎) ausgewählt aus den Gruppen (b1) bis (b4) an allen in einem der erfindungsgemäßen reaktiven Klebstofffilme enthaltenen reaktiven Monomeren beträgt mindestens 50 Gewichtsprozente.

In einer bevorzugten Ausführungsform beträgt der Anteil mindestens 60 Gewichtsprozente, besonders bevorzugt mindestens 70 Gewichtsprozente.

In einer weiteren bevorzugten Ausführungsform ist ein geeignetes, reaktives Monomer (M₍₁₎-M₍ₙ₎) ausgewählt aus den Gruppen (b1) bis (b3), besonders bevorzugt aus den Gruppen (b1) bis (b2), am bevorzugtesten aus der Gruppe (b1).

Neben den erfindungsgemäß ausgewählten Monomeren können die erfindungsgemäßen reaktiven Klebstofffilme weitere reaktive Monomere enthalten. Dies können beispielsweise weitere Acrylmonomere sein oder Vinylverbindungen, insbesondere stickstoffhaltige Vinylverbindungen und/oder andere monomere, oligomere oder polymere Verbindungen mit Kohlenstoff-Kohlenstoff-Doppelbindung(en).

In einer bevorzugten Ausführungsform beträgt der Anteil an reaktiven Monomeren, ausgewählt aus den folgenden Gruppen (x1) bis (x4), an allen in einem der erfindungsgemäßen reaktiven Klebstofffilme enthaltenen reaktiven Monomeren in Summe kleiner 2,0 Gewichtsprozent, bevorzugt kleiner 0,2 Gewichtsprozent, besonders bevorzugt 0 Gewichtsprozent.

Die Gruppen (x1) bis (x4) bestehen jeweils aus den folgenden Monomeren:
(x1): Acrylsäure, Methylacrylat, Ethylacrylat, Propylacrylat, Butylacrylat, Pentylacrylat, Hexylacrylat, Methacrylsäure, Methylmethacrylat, Ethylmethacrylat, Propylmethacrylat, Butylmethacrylat, Pentylmethacrylat, Hexylmethacrylat, jeweils in allen isomeren Formen;
(x2): Phenylacrylat, Benzylacrylat, methylsubstituierte Phenylacrylate, methylsubstituierte Benzylacrylate, Phenylmethacrylat, Benzylmethacrylat, methylsubstituierte Phenylmethacrylate, methylsubstituierte Benzylmethacrylate, jeweils in allen isomeren Formen;
(x3): Hydroxyethylacrylat, Hydroxypropylacrylat, Hydroxybutylacrylat, Methoxyethylacrylat, Methoxypropylacrylat, Methoxybutylacrylat, Ethoxyethylacrylat, Ethoxypropylacrylat, Ethoxybutylacrylat, Phenoxyethylacrylat, Hydroxyethylmethacrylat, Hydroxypropylmethacrylat, Hydroxybutylmethacrylat, Methoxyethylmethacrylat, Methoxypropylmethacrylat, Methoxybutylmethacrylat, Ethoxyethylmethacrylat, Ethoxypropylmethacrylat, Ethoxybutylmethacrylat, Phenoxyethylmethacrylat, jeweils in allen isomeren Formen;
(x4): Tetrahydrofurfurylacrylat (CAS-Nr.: 2399-48-6), Tetrahydrofurfurylmethacrylat (CAS-Nr.: 2455-24-5).

Die Menge des reaktiven Monomers/der reaktiven Monomere liegt erfindungsgemäß im Bereich von etwa 10-90 Gew.%, bevorzugt etwa 40-70 Gew.%, bezogen auf die Gesamtmischung der Bestandteile eines der erfindungsgemäßen reaktiven Klebstofffilme. Am stärksten bevorzugt werden etwa 45-65 Gew.% des reaktiven Monomers/ der reaktiven Monomere, bezogen auf die Gesamtmischung der Bestandteile eines der reaktiven Klebstofffilme, eingesetzt. Die Gesamtmischung der Bestandteile eines der erfindungsgemäßen reaktiven Klebstofffilme steht hier für die gesamte Menge der eingesetzten polymeren Filmbildner-Matrix (a), der reaktiven Monomere e (b), des Reagens (c) sowie weiterer optional vorliegender Komponenten, die als Summe (in Gew.%) erhalten wird.

### Initiator, insbesondere Radikalinitiator

Wie hierin verwendet, steht der Begriff Initiator, insbesondere Radikalinitiator bzw. radikalbildende Substanz (oder auch Härter), für eine Verbindung, die eine Polymerisationsreaktion oder Vernetzung des Klebstoffs einleiten kann. Der Initiator, insbesondere Radikalinitiator, nimmt allerdings zu einem sehr geringen Anteil am Reaktionsgeschehen teil und bildet folglich keinen die Eigenschaften der Verklebung bestimmenden Polymeranteil.

In der vorliegenden Erfindung wird dem mindestens einen ersten, erfindungsgemäßen reaktiven Klebstofffilm des Klebstofffilm-Systems ein Initiator, insbesondere Radikalinitiator, zugesetzt.

Bevorzugt werden Radikalinitiatoren. Es können alle im Stand der Technik bekannten Radikalinitiatoren eingesetzt werden. Bevorzugte Radikalinitiatoren sind Peroxide, Hydroperoxide und Azoverbindungen.

In einer besonders bevorzugten, erfindungsgemäßen Ausführungsform ist der Radikalinitiator ein organisches Peroxid. Besonders bevorzugt sind Hydroperoxide, insbesondere Diisopropylbenzol-hydroperoxid (CAS-Nr. 26762-93-6). Diisopropylbenzol-hydroperoxid wird bevorzugt in Form einer 50 gew.%igen Lösung von Diisopropylhydroperoxid in Diisopropylbenzol, erhältlich unter dem Handelsnamen Peroxan^{®} IHP-50 von der Firma Pergan GmbH in 46395 Bocholt, Deutschland, eingesetzt. α,α- Dimethylbenzylhydroperoxid, das auch als Cumolhydroperoxid (CAS-Nr. 80-15-9) bekannt ist, kann ebenfalls verwendet werden. Weiterhin können zum Beispiel auch p-Menthanhydroperoxid (CAS-Nr. 26762-92-5), tert.-Amyl-hydroperoxid (CAS-Nr. 3425-61-4) oder 1,1,3,3-Tetramethylbutyl-hydroperoxid (CAS-Nr. 5809-08-5) verwendet werden.

Die Menge des Radikalinitiators liegt erfindungsgemäß im Bereich von etwa 1 bis 20 Gew.%, bevorzugt etwa 5 bis 15 Gew.%, bezogen auf die Gesamtmischung der Bestandteile des mindestens einen ersten erfindungsgemäßen reaktiven Klebstofffilms. Am stärksten bevorzugt werden etwa 8 bis 12 Gew.% Radikalinitiator, bezogen auf die Gesamtmischung der Bestandteile des mindestens einen ersten erfindungsgemäßen reaktiven Klebstofffilms, eingesetzt. Die Gesamtmischung der Bestandteile des mindestens einen ersten erfindungsgemäßen reaktiven Klebstofffilms steht hier für die gesamte Menge der eingesetzten polymeren Filmbildner-Matrix (a), der reaktiven Monomere (b), des Reagens (c) sowie weiterer optional vorliegender Komponenten, die als Summe (in Gew.%) erhalten wird.

### Aktivator

Wie hier verwendet, steht der Begriff Aktivator für eine Verbindung, die bereits bei sehr geringen Konzentrationen den Ablauf der Polymerisation erst ermöglicht oder beschleunigt. Aktivatoren können auch Beschleuniger oder Akzeleratoren genannt werden.

In der vorliegenden Erfindung wird dem mindestens einen zweiten, erfindungsgemäßen reaktiven Klebstofffilm des Klebstofffilm-Systems ein Aktivator zugesetzt.

Geeignete Aktivatoren zur Verwendung in der vorliegenden Erfindung, wenn ein radikalisch polymerisierbares System aktiviert werden soll, sind beispielsweise ausgewählt aus der Gruppe, bestehend aus einem Dihydropyridin-Derivat oder einem Übergangsmetallkomplex, insbesondere einem Übergangsmetall-Phthalocyanin-Komplex.

In einer erfindungsgemäßen Ausführungsform ist der Aktivator 3,5-Diethyl-1,2-dihydro-1-phenyl-2-propylpyridin (auch PDHP genannt, CAS-Nr. 34562-31-7).

In einer bevorzugten erfindungsgemäßen Ausführungsform wird eine Komplexverbindung mit einem Eisen-, Mangan-, oder Kobalt-Kation als Zentralatom und einem Phthaloycyanin-Anion als Liganden eingesetzt. Das Eisen-, Mangan-, oder Kobalt-Kation ist in der Komplexverbindung zweifach positiv geladen, während das Phthaloycyanin-Anion zweifach negativ geladen ist. Das Eisen-, Mangan-, oder Kobalt-Kation ersetzt in der Komplexverbindung jeweils zwei Wasserstoff-Atome, die der Ligand vor der Umsetzung zur Komplexverbindung an den Stickstoff-Atomen getragen hat.

Die Phthalocyanin-Liganden können gegebenenfalls Substituenten anstelle der an die Kohlenstoff-Atome gebundenen H-Atome tragen. In diesem Fall spricht man von Derivaten dieser Verbindungen. Geeignete Substituenten sind ausgewählt aus der Gruppe, bestehend aus Fluor, Chlor, Brom, lod, Methyl, Ethyl, Propyl, Isopropyl, Butyl, tert.-Butyl, - OH, -NH₂, -NO₂.

Ein besonders geeigneter Aktivator umfasst Eisen(II)-phthalocyanin (CAS-Nr. 132-16-1), Mangan(II)-phthalocyanin (CAS-Nr. 14325-24-7), oder Kobalt(II)-phthalocyanin (CAS-Nr. 3317-67-7). Am bevorzugtesten wird Eisen(II)-phthalocyanin (CAS-Nr. 132-16-1), erhältlich von der Firma Chemos GmbH in 93128 Regenstauf, Deutschland, als Aktivator eingesetzt.

Die Menge des Aktivators liegt erfindungsgemäß im Bereich von größer 0 bis etwa 10 Gew.%, bevorzugt etwa 0,1-5,0 Gew.%, bezogen auf die Gesamtmischung der Bestandteile des mindestens einen zweiten erfindungsgemäßen reaktiven Klebstofffilms. Am stärksten bevorzugt werden etwa 0,2-3,0 Gew.%, noch bevorzugter 0,5-2,0 Gew.% Aktivator, bezogen auf die Gesamtmischung der Bestandteile des mindestens einen zweiten erfindungsgemäßen reaktiven Klebstofffilms eingesetzt.

Die Gesamtmischung der Bestandteile des mindestens einen zweiten erfindungsgemäßen reaktiven Klebstofffilms steht hier für die gesamte Menge der eingesetzten polymeren Filmbildner-Matrix (a), der reaktiven Monomere (b), des Reagens (c) sowie weiterer optional vorliegender Komponenten, die als Summe (in Gew.%) erhalten wird.

### Vernetzer

Wie hier verwendet, steht der Begriff Vernetzer für chemische Verbindungen, die imstande sind, lineare Molekülketten mit reaktionsfähigen, funktionellen Gruppen zu versehen, damit sich aus den zweidimensionalen Strukturen über Ausbildung intermolekularer Brücken dreidimensional-vernetzte Strukturen bilden können.

Typische Beispiele für Vernetzer sind chemische Verbindungen, die innerhalb des Moleküls oder an den beiden Molekülenden zwei oder mehr gleiche oder unterschiedliche funktionelle Gruppen aufweisen und folglich Moleküle gleicher oder auch unterschiedlicher Strukturen miteinander vernetzen können. Im Gegensatz zum Aktivator, wie oben beschrieben, wird ein Vernetzer in das Polymer-Netzwerk eingebaut.

Bevorzugte Vernetzer sind Diacrylate, Dimethacrylate, Triacrylate, Trimethacrylate, Tetraacrylate, Tetramethacrylate, höher funktionelle Acrylate und/oder höher funktionelle Methacrylate.

Bevorzugte Vernetzer sind somit gleichzeitig auch reaktive Monomere.

In besonders bevorzugten, erfindungsgemäßen Ausführungsformen werden Ethylenglykoldimethacrylat (CAS-Nr.: 97-90-5), Trimethyloylpropanetriacrylat (CAS-Nr.: 15625-89-5 und/ oder Di(trimethylolpropane)tetraacrylat (CAS-Nr.: 94108-97-1) als Vernetzer eingesetzt.

### Weitere Bestandteile der reaktiven Klebstofffilme

Die reaktiven Klebstofffilme der vorliegenden Erfindung können gegebenenfalls weitere Additive und/oder Hilfsstoffe enthalten, die im Stand der Technik bekannt sind. Hier sind beispielsweise Füllstoffe, Farbstoffe, Keimbildner, rheologische Additive (zum Beispiel pyrogene Kieselsäure), Blähmittel, klebverstärkende Additive (Haftvermittler, insbesondere Silane, Tackifier-Harze), Compoundierungsmittel, Weichmacher und/oder Alterungs-, Licht- und UV-Schutzmittel, zum Beispiel in Form von primären und sekundären Antioxidantien zu nennen. Die weiteren Bestandteile der erfindungsgemäßen reaktiven Klebstofffilme können gleichzeitig auch reaktive Monomere sein. Dies kann insbesondere bevorzugt bei den Silan-Haftvermittlern der Fall sein. Bevorzugt wird in diesem Zusammenhang 3-Trimethoxysilylpropylmethacrylat (CAS-Nr.: 2530-85-0), erhältlich unter dem Handelsnamen Dynasylan^{®}MEMO von der Firma Evonik AG, Rellinghauser Straße 1-11 45128 Essen, eingesetzt.

### Reaktiver Klebstofffilm

Wie hierin verwendet, soll der Begriff "Klebstofffilm" (oder auch Klebstoffschicht, Klebstofffolie) eine vollständig oder nicht-vollständig bereitgestellte Auftragung der jeweiligen Komponentenmischung, wie nachfolgend beschrieben, umfassen. So kann beispielsweise eine punktförmige Auftragung der Klebstoffkomponenten, die die zu verklebende Substratoberfläche(n) nicht vollständig bedeckt, ebenfalls zu einer dauerhaften Verklebung im Sinne der vorliegenden Erfindung führen.

In einer bevorzugten, erfindungsgemäßen Ausführungsform umfasst der mindestens eine erste, erfindungsgemäße reaktive Klebstofffilm A eine Mischung der folgenden Bestandteile: thermoplastisches Polyurethan, insbesondere Desmomelt^{®} 530, 4-Acryloylmorpholin, N-Vinylcaprolactam (CAS-Nr.: 2235-00-9), Di(trimethylolpropane)tetraacrylat, 3-Trimethoxysilylpropylmethacrylat (CAS-Nr.: 2530-85-0) und Diisopropylbenzol-hydroperoxid.

Jede der bevorzugten, erfindungsgemäßen Ausführungsformen enthält etwa 10 bis 90 Gew. % thermoplastisches Polyurethan, etwa 10 bis 90 Gew. % reaktive(s) Monomer(e) und etwa 1 bis 20 Gew. % Diisopropylbenzol-hydroperoxid, vorzugsweise etwa 20 bis 50 Gew. % thermoplastisches Polyurethan, etwa 40 bis 70 Gew. % reaktive(s) Monomer(e) und etwa 5 bis 15 Gew. % Diisopropylbenzol-hydroperoxid, bezogen auf die Gesamtmischung der Bestandteile des mindestens einen ersten, erfindungsgemäßen reaktiven Klebstofffilms A.

In einer bevorzugten, erfindungsgemäßen Ausführungsform umfasst der mindestens eine zweite, erfindungsgemäße reaktive Klebstofffilm B eine Mischung der folgenden Bestandteile: thermoplastisches Polyurethan, insbesondere Desmomelt^{®} 530, 4-Acryloylmorpholin, N-Vinylcaprolactam, Di(trimethylolpropane)tetraacrylat, 3-Trimethoxysilylpropylmethacrylat und Eisen(II)-phthalocyanin.

Jede der bevorzugten, erfindungsgemäßen Ausführungsformen enthält etwa 10 bis 90 Gew. % thermoplastisches Polyurethan, etwa 10 bis 90 Gew. % reaktive(s) Monomer(e) und größer 0 bis etwa 10 Gew. % Eisen(II)-phthalocyanin, vorzugsweise etwa 20 bis 50 Gew. % thermoplastisches Polyurethan, etwa 40 bis 70 Gew. % reaktive(s) Monomer(e) und etwa 0,1 bis 5 Gew. % Eisen(II)-phthalocyanin, bezogen auf die Gesamtmischung der Bestandteile des mindestens einen zweiten, erfindungsgemäßen reaktiven Klebstofffilms B.

Wie hierin verwendet, bezieht sich die Gesamtmischung der Bestandteile der erfindungsgemäßen reaktiven Klebstofffilme auf die gesamte Menge der eingesetzten polymeren Filmbildner-Matrix (a), der/des reaktiven Monomere/Monomers (b), des Reagens (c) sowie weiterer optional vorliegender Komponenten, die als Summe (in Gew.%) erhalten wird.

Die reaktiven Klebstofffilme der Erfindung besitzen in der Regel eine Schichtdicke im Bereich von etwa 20 bis 200 µm, bevorzugt etwa 30 bis 100 µm, bevorzugter etwa 40 bis 60 µm und besonders bevorzugt etwa 50 µm. Zur Herstellung größerer Schichtdicken kann es von Vorteil sein, mehrere Klebstofffilmschichten zusammen zu laminieren.

Zudem sind die erfindungsgemäßen, reaktiven Klebstofffilme dadurch gekennzeichnet, dass sie bevorzugt haftklebrige Eigenschaften besitzen. Als haftklebrige Stoffe sind gemäß Römpp solche viskoelastischen Klebstoffe definiert (Römpp Online 2013, Dokumentkennung RD-08-00162), deren abgebundener, trockener Film bei Raumtemperatur permanent klebrig ist und klebfähig bleibt. Die Haftklebung erfolgt durch leichten Anpressdruck sofort auf fast allen Substraten. Als leichter Anpressdruck ist hier ein Anpressdruck von größer 0 bar, der für eine Dauer von größer 0 Sekunden ausgeübt wird, gemeint.

### Reaktives Klebstofffilm-System

Erfindungsgemäß werden der erste und der zweite reaktive Klebstofffilm, wie oben beschrieben, für ein reaktives Klebstofffilm-System eingesetzt, welches dadurch gekennzeichnet ist, dass der erste reaktive Klebstofffilm A, neben der Filmbildner-Matrix (a) und mindestens einem reaktiven Monomer (b), einen Initiator (c), insbesondere Radikalinitiator, enthält und der zweite reaktive Klebstofffilm B, neben der Filmbildner-Matrix (a) und mindestens einem reaktiven Monomer (b), einen Aktivator (c) enthält. Bevorzugt wird Eisen(II)-phthalocyanin als Aktivator eingesetzt.

Außerdem wird erfindungsgemäß ein reaktives Klebstofffilm-System bereitgestellt, umfassend zwei oder mehrere reaktive Klebstofffilme, wie oben definiert, dadurch gekennzeichnet, dass ein erster reaktiver Klebstofffilm A einen Initiator, insbesondere Radikalinitiator enthält und ein zweiter reaktiver Klebstofffilm B einen Aktivator enthält und diese beiden reaktiven Klebstofffilme A und B jeweils abwechselnd vorliegen.

Der erste und der zweite reaktive Klebstofffilm A und B härten aus und vernetzen gegebenenfalls, sobald sie unter mäßigem Druck, insbesondere 0,5 bis 3 bar, bei Raumtemperatur (23°C) flächig in Kontakt gebracht werden. Wahlweise sind höhere bzw. niedrigere Temperaturen auch möglich. Der genannte mäßige Druck soll insbesondere leicht von Hand zu erreichen sein. Die Kontaktzeit beträgt erfindungsgemäß bei Raumtemperatur einige Sekunden bis einige Minuten, bevorzugt 10 bis 60 Sekunden. Der Druck kann maschinell oder manuell aufgebracht werden.

Werden die beiden reaktiven Klebstofffilme A und B, wie oben beschrieben, zuvor auf den zu verklebenden Substraten aufgebracht, kommt durch die oben beschriebene Aushärtung und gegebenenfalls Vernetzung eine dauerhafte Verklebung der Substrate zu Stande. Alternativ kann zunächst auch Klebstofffilm A auf das erste zu verklebende Substrat aufgebracht und auf Klebstofffilm A Klebstofffilm B aufgebracht werden. Anschließend wird dann das zweite zu verklebende Substrat auf Klebstofffilm B aufgebracht.

Weiterhin kann das reaktive Klebstofffilmsystem der Erfindung weitere Filme, Schichten, Klebstoffe sowie permanente und oder temporäre Träger umfassen.

Geeignete Trägermaterialien sind einem Fachmann auf dem Gebiet bekannt. Beispielsweise können als permanente Träger Folien (Polyester, PET, PE, PP, BOPP, PVC, Polyimide), Vliese, Schäume, Gewebe und/oder Gewebefolien verwendet werden. Temporäre Träger sollten mit einer Trennschicht versehen sein, wobei die Trennschicht in der Regel aus einem Silikontrennlack oder einem fluorierten Trennlack besteht oder polyolefinischen Charakter (HDPE, LDPE) aufweist.

Gegebenenfalls kann es notwendig sein, dass die Oberflächen der zu verklebenden Substrate durch ein physikalisches, chemisches und/oder physikalisch-chemisches Verfahren vorbehandelt werden. Hier ist beispielsweise das Aufbringen eines Primers oder einer Haftvermittlerzusammensetzung vorteilhaft.

### Substrate

Geeignete Substrate, die zur Verklebung über das erfindungsgemäße, reaktive Klebstofffilm-System geeignet sind, sind Metalle, Glas, Holz, Beton, Stein, Keramik, Textil und/oder Kunststoffe. Die zu verklebenden Substrate können gleich oder verschieden sein.

In einer bevorzugten Ausführungsform wird das erfindungsgemäße, reaktive Klebstofffilm-System zur Verklebung von Metallen, Glas und Kunststoffen eingesetzt. In einer besonders bevorzugten, erfindungsgemäßen Ausführungsform werden Polycarbonate und eloxiertes Aluminium verklebt.

Die zu verklebenden Metallsubstrate können generell aus allen geläufigen Metallen und Metalllegierungen gefertigt werden. Bevorzugt kommen Metalle, wie zum Beispiel Aluminium, Edelstahl, Stahl, Magnesium, Zink, Nickel, Messing, Kupfer, Titan, eisenhaltige Metalle und Legierungen zum Einsatz. Die zu verklebenden Teile können außerdem aus unterschiedlichen Metallen aufgebaut sein.

Geeignete Kunststoffsubstrate sind beispielsweise Acrylnitril-Butadien-Styrol-Copolymere (ABS), Polycarbonate (PC), ABS/PC-Blends, PMMA, Polyamide, Glasfaserverstärkte Polyamide, Polyvinylchlorid, Polyvinylenfluorid, Cellulose Acetat, Cycloolefin-Copolymere, Flüssigkristallpolymere (LCP), Polylactid, Polyetherketone, Polyetherimid, Polyethersulfon, Polymethacrylmethylimid, Polymethylpenten, Polyphenylether, Polyphenylensulfid, Polyphthalamid, Polyurethane, Polyvinylacetat, Styrol Acrylnitril Copolymere, Polyacrylate bzw. Polymethacrylate, Polyoxymethylen, Acrylester-Styrol-Acrylnitril Copolymere, Polyethylen, Polystyrol, Polypropylen und/oder Polyester, wie z.B. Polybutylenterephthalate (PBT) und/oder Polyethylenterephthalat (PET).

Substrate können lackiert, bedruckt, bedampft oder besputtert sein.

Die zu verklebenden Substrate können jede beliebige Form annehmen, die für die Verwendung des resultierenden Verbundkörpers erforderlich ist. In der einfachsten Form sind die Substrate eben. Außerdem können auch dreidimensionale Substrate, die z.B. geneigt sind, mit dem erfindungsgemäßen, reaktiven Klebstofffilm-System verklebt werden. Die zu verklebenden Substrate können auch die verschiedensten Funktionen einnehmen, wie zum Beispiel Gehäuse, Sichtfenster, Versteifungselemente, etc.

### Verfahren zur Herstellung eines reaktiven Klebstofffilms

Die erfindungsgemäßen, reaktiven Klebstofffilme werden durch das nachfolgend beschriebene Verfahren hergestellt:
In einem ersten Schritt werden die Inhaltsstoffe in einem oder mehreren Lösemittel(n) und/oder Wasser gelöst bzw. fein verteilt. Alternativ ist kein Lösemittel und/oder Wasser notwendig, da die Inhaltsstoffe bereits vollständig ineinander löslich sind (ggf. unter Einwirkung von Wärme und/oder Scherung). Geeignete Lösemittel sind im Stand der Technik bekannt, wobei bevorzugt Lösemittel eingesetzt werden, in denen mindestens einer der Inhaltsstoffe eine gute Löslichkeit aufweist. Besonders bevorzugt ist Aceton.

Wie hierin verwendet, umfasst der Begriff Inhaltsstoff die polymere Filmbildner-Matrix, mindestens ein reaktives Monomer , ein Reagens, ausgewählt aus einem Initiator, insbesondere Radikalinitiator oder einem Aktivator, sowie gegebenenfalls weitere Additive und/oder Hilfsstoffe, wie oben definiert.

Anschließend werden die aufgelösten oder fein verteilten Inhaltsstoffe in einem zweiten Schritt vermischt. Zur Herstellung der Mischung werden übliche Rührgeräte eingesetzt. Gegebenenfalls wird die Lösung zudem erwärmt. Ggf. werden die Inhaltsstoffe gleichzeitig aufgelöst bzw. feinverteilt und vermischt.

Daraufhin wird in einem dritten Schritt ein Trennliner, ein Trennpapier, ein Trägermaterial oder ein Haftklebstoff mit der Mischung der aufgelösten bzw. fein verteilten Inhaltsstoffe nach Schritt 2 beschichtet. Die Beschichtung erfolgt nach den üblichen Techniken, die im Stand der Technik bekannt sind.

Nach der Beschichtung wird das Lösemittel in einem vierten Schritt durch Abdampfen entfernt.

Gegebenenfalls kann der reaktive Klebstofffilm in einem weiteren Schritt zu einer Rolle aufgewickelt werden.

Zur Lagerung werden die erfindungsgemäßen, reaktiven Klebstofffilme mit einem Trennliner oder -papier abgedeckt.

Alternativ werden die erfindungsgemäßen, reaktiven Klebstofffilme lösungsmittelfrei durch Extrusion, Hotmeltdüsenbeschichtung oder Kalandrieren hergestellt.

### Kit zur Bereitstellung eines erfindungsgemäßen 2-Komponentenklebesystems in Filmform

Außerdem wird erfindungsgemäß ein Kit zur Bereitstellung eines reaktiven 2-Komponentenklebesystems in Filmform bereitgestellt. Dieses Kit umfasst mindestens einen ersten reaktiven Klebstofffilm A, der einen Initiator, insbesondere Radikalinitiator, enthält, wie oben beschrieben, und mindestens einen zweiten reaktiven Klebstofffilm B, der einen Aktivator enthält, wie oben beschrieben.

Typischerweise wird das erfindungsgemäße Kit wie folgt verwendet:
Der mindestens eine erste Klebstofffilm A wird auf eine Oberfläche eines zu verklebenden Substrats aufgebracht. Außerdem wird der mindestens eine zweite Klebstofffilm B auf eine Oberfläche eines zweiten zu verklebenden Substrats aufgebracht. Klebstofffilm A und Klebstofffilm B werden in Kontakt gebracht und über Verpresszeiten im Bereich von einigen Sekunden bis zu mehreren Minuten bei Raumtemperatur (23°C) in Kontakt gelassen, wodurch die Polymerisationsreaktion startet und der Klebstoff aushärtet. Alternativ kann der mindestens eine zweite Klebstofffilm B auch auf den ersten Klebstofffilm A aufgebracht werden und erst anschließend die Oberfläche eines zweiten zu verklebenden Substrats darauf aufgebracht werden.

Gegebenenfalls kann das oben beschriebene Verfahren wiederholt werden, um so eine Verklebung der Schichten Substrat-A-B-A-B-Substrat oder Substrat-B-A-B-Substrat oder Substrat-A-B-A-Substrat, etc. zu erreichen. Dies kann vorteilhaft sein, wenn unterschiedliche ausgeprägte Hafteigenschaften zwischen den zu verklebenden Substraten und den ersten und zweiten Klebstofffilmen A und B gegeben sind.

### Verbundkörper

Zuletzt wird erfindungsgemäß ein Verbundkörper bereitgestellt, der durch das erfindungsgemäße, reaktive Klebstofffilm-System, wie oben definiert, oder durch das erfindungsgemäße Kit, wie oben definiert, verbunden ist.

### Produkteigenschaften

Das erfindungsgemäße reaktive Klebstofffilm-System, umfassend zwei reaktive Klebstofffilme zeigt hervorragende Produkteigenschaften, die auch für den Fachmann derartig nicht vorherzusehen waren.

Zum einen sind die Klebstofffilme hinsichtlich ihres Geruchs gegenüber dem Stand der Technik stark verbessert, da sie sehr viel weniger bis gar nicht riechen, zum anderen werden überraschend hohe Verklebungsfestigkeiten erzielt, die gegenüber dem Stand der Technik ebenfalls eine deutliche Verbesserung darstellen. In Zugscherfestigkeitsprüfungen werden bei Verklebungen von Polycarbonat-Prüfkörpern beispielsweise zum Teil Werte von größer als 15 MPa erreicht (siehe Beispiele). Bislang bekannte Werte lagen wesentlich darunter. Im Push-Out Test werden bei Verklebungen von Polycarbonat-Prüfkörpern zum Teil Werte von größer als 7 MPa erreicht (siehe Beispiele). Von solchen Ergebnissen ist im Zusammenhang mit reaktiven Klebstofffilm-Systemen bislang nichts berichtet worden. Andere, als die erfindungsgemäß ausgewählten reaktiven Monomere wurde ebenfalls geprüft. Mit diesen nicht erfindungsgemäßen Monomeren wurden nur sehr geringe Verklebungsfestigkeiten erzielt (siehe Vergleichsbeispiele).

### Experimenteller Teil

Die nachfolgenden Beispiele dienen zur Verdeutlichung der vorliegenden Erfindung, sollen aber keinesfalls als Einschränkung des Schutzbereichs verstanden werden.

### Herstellung einer Lösung der Filmbildner-Matrix

### Polyurethan (PU) - Lösung:

Eine 20%ige acetonische Lösung des filmbildenden Polymers wird hergestellt, indem zunächst 120 g Desmomelt^{®} 530 und 480 g Aceton in ein Schraubglas eingewogen werden und das Schraubglas verschlossen wird. Durch mehrtägiges Rollen des Schraubglases auf einer Rollbank wird das Desmomelt^{®} 530 vollständig in Lösung gebracht. Je nach Rollgeschwindigkeit dauert der Vorgang etwa ein bis sieben Tage. Alternativ kann die acetonische Lösung auch durch Rühren des Desmomelt^{®} 530-Granulats in Aceton mit einem handelsüblichen Laborrührer hergestellt werden.

### Beispiel 1

### Herstellung des ersten reaktiven, haftklebrigen Klebstofffilms A, umfassend einen Radikalinitiator

174,5 g der 20%igen acetonischen Lösung von Desmomelt^{®} 530 (PU-Lösung) werden mit 43,0 g 4-Acryloylmorpholin, 11,6 g N-Vinylcaprolactam, 3,5 g Di(trimethyolpropan)tetraacrylat, 1,2 g 3-Trimethoxysilylpropylmethacrylat, und 11,6 g Peroxan^{®} IHP-50 mit einem handelsüblichen Laborrührer 60 Minuten gemischt.

Die erhaltene homogene Mischung wird mit Hilfe eines handelsüblichen Laborstreichtisches (zum Beispiel von der Firma SMO (Sondermaschinen Oschersleben GmbH)) mit einem Streichmesser auf einer silikonisierten Polyesterfolie (Trennliner) ausgestrichen. Anschließend wird das Aceton bei 60°C im Umlufttrockenschrank 10 Minuten abgedampft. Die Spaltbreite beim Ausstreichen wird so eingestellt, dass nach dem Abdampfen des Lösemittels ein 50 µm dicker Film erhalten wird. Der erhaltene haftklebrige, reaktive Film A wird bis zur Verklebung mit einer zweiten silikonisierten Polyesterfolie (Trennliner) abgedeckt und aufbewahrt.

### Herstellung des zweiten reaktiven, haftklebrigen Klebstofffilms B, umfassend einen Aktivator

183,0 g der 20%igen acetonischen Lösung von Desmomelt^{®} 530 (PU-Lösung) werden mit 45,2 g 4-Acryloylmorpholin, 12,2 g N-Vinylcaprolactam, 3,7 g Di(trimethyolpropan)tetraacrylat, 1,2 g 3-Trimethoxysilylpropylmethacrylat, und 1,1 g Eisen(II)-phthalocyanin mit einem handelsüblichen Laborrührer 60 Minuten gemischt.

Die erhaltene homogene Mischung wird mit Hilfe eines handelsüblichen Laborstreichtisches mit einem Streichmesser auf einer silikonisierten Polyesterfolie (Trennliner) ausgestrichen. Anschließend wird das Aceton bei 60°C im Umlufttrockenschrank 10 Minuten abgedampft. Die Spaltbreite beim Ausstreichen wird so eingestellt, dass nach dem Abdampfen des Lösemittels ein 50 µm dicker Film erhalten wird. Der erhaltene haftklebrige Film B wird bis zur Verklebung mit einer zweiten silikonisierten Polyesterfolie (Trennliner) abgedeckt und aufbewahrt.

Die prozentualen Zusammensetzungen der reaktiven Klebstofffilme A und B sowie die Einwaagen zur Herstellung der vorausgegangenen Lösungen sind in der folgenden Tabelle aufgeführt:

### Beispiel 1, Lösung und reaktiver Klebstofffilm A

| | Gew.% Feststoff* | Einwaage (g) mit Lösemittel |
|---|---|---|
| Desmomelt^{®} 530 | 34,9 | |
| Desmomelt^{®} 530-Lösung in Aceton (20 Gew.% Desmomelt^{®} 530 in Aceton) | | 174,5 |
| 4-Acryloylmorpholin | 43,0 | 43,0 |
| N-Vinylcaprolactam | 11,6 | 11,6 |
| Di(trimethyolpropan)tetraacrylat | 3,5 | 3,5 |
| Dynasylan^{®} Memo** | 1,2 | 1,2 |
| Diisopropylhydroperoxid | 5,8 | |
| Peroxan^{®} IHP-50*** | | 11,6 |
| Summe | 100,0 | 245,4 |

| | | |
|---|---|---|
| * Unter Feststoff werden hier alle Stoffe verstanden, die nicht Lösemittel sind. Lösemittel sind hier Aceton und Diisopropybenzol. ** 3-Trimethoxysilylpropylmethacrylat, Fa. Evonik *** 50 gew.%ige Lösung von Diisopropylhydroperoxid in Diisopropylbenzol, Fa. Pergan | | |

### Beispiel 1, Lösung und reaktiver Klebstofffilm B

| | Gew.% Feststoff* | Einwaage (g) mit Lösemittel |
|---|---|---|
| Desmomelt^{®} 530 | 36,6 | |
| Desmomelt^{®} 530-Lösung in Aceton (20 Gew.% Desmomelt^{®} 530 in Aceton) | | 183,0 |
| 4-Acryloylmorpholin | 45,2 | 45,2 |
| N-Vinylcaprolactam | 12,2 | 12,2 |
| Di(trimethyolpropan)tetraacrylat | 3,7 | 3,7 |
| Dynasylan^{®} Memo** | 1,2 | 1,2 |
| Eisen(II)-phthalocyanin | 1,1 | 1,1 |
| Summe | 100,0 | 246,4 |

| | | |
|---|---|---|
| * Unter Feststoff werden hier alle Stoffe verstanden, die nicht Lösemittel sind. Lösemittel ist hier Aceton. ** 3-Trimethoxysilylpropylmethacrylat, Fa. Evonik | | |

In analoger Weise wie in Beispiel 1 werden die Lösungen und reaktiven Klebstofffilme A und B der weiteren Beispiele und Vergleichsbeispiele hergestellt.

Die folgenden Tabellen geben Auskunft über die Zusammensetzungen der Lösungen und reaktiven Klebstofffilme A und B in den weiteren Beispielen und Vergleichsbeispielen.

### Beispiel 2, Lösung und reaktiver Klebstofffilm A

| | Gew.% Feststoff* | Einwaage (g) mit Lösemittel |
|---|---|---|
| Desmomelt^{®} 530 | 34,9 | |
| Desmomelt^{®} 530-Lösung in Aceton (20 Gew.% Desmomelt^{®} 530 in Aceton) | | 174,5 |
| 2-Hydroxy-3-phenoxy-propylacrylat | 43,0 | 43,0 |
| N-Vinylcaprolactam | 11,6 | 11,6 |
| Di(trimethyolpropan)tetraacrylat | 3,5 | 3,5 |
| Dynasylan^{®} Memo** | 1,2 | 1,2 |
| Diisopropylhydroperoxid | 5,8 | |
| Peroxan^{®} IHP-50*** | | 11,6 |
| Summe | 100,0 | 245,4 |

| | | |
|---|---|---|
| * Unter Feststoff werden hier alle Stoffe verstanden, die nicht Lösemittel sind. Lösemittel sind hier Aceton und Diisopropybenzol. ** 3-Trimethoxysilylpropylmethacrylat, Fa. Evonik *** 50 gew.%ige Lösung von Diisopropylhydroperoxid in Diisopropylbenzol, Fa. Pergan | | |

### Beispiel 2, Lösung und reaktiver Klebstofffilm B

| | Gew.% Feststoff* | Einwaage (g) mit Lösemittel |
|---|---|---|
| Desmomelt^{®} 530 | 36,6 | |
| Desmomelt^{®} 530-Lösung in Aceton (20 Gew.% Desmomelt^{®} 530 in Aceton) | | 183,0 |
| 2-Hydroxy-3-phenoxy-propylacrylat | 45,2 | 45,2 |
| N-Vinylcaprolactam | 12,2 | 12,2 |
| Di(trimethyolpropan)tetraacrylat | 3,7 | 3,7 |
| Dynasylan^{®} Memo** | 1,2 | 1,2 |
| Eisen(II)-phthalocyanin | 1,1 | 1,1 |
| Summe | 100,0 | 246,4 |

| | | |
|---|---|---|
| * Unter Feststoff werden hier alle Stoffe verstanden, die nicht Lösemittel sind. Lösemittel ist hier Aceton. ** 3-Trimethoxysilylpropylmethacrylat, Fa. Evonik | | |

### Beispiel 3, Lösung und reaktiver Klebstofffilm A

| | Gew.% Feststoff* | Einwaage (g) mit Lösemittel |
|---|---|---|
| Desmomelt^{®} 530 | 34,9 | |
| Desmomelt^{®} 530-Lösung in Aceton (20 Gew.% Desmomelt^{®} 530 in Aceton) | | 174,5 |
| SR 531 ** | 43,0 | 43,0 |
| N-Vinylcaprolactam | 11,6 | 11,6 |
| Di(trimethyolpropan)tetraacrylat | 3,5 | 3,5 |
| Dynasylan^{®} Memo*** | 1,2 | 1,2 |
| Diisopropylhydroperoxid | 5,8 | |
| Peroxan^{®} IHP-50**** | | 11,6 |
| Summe | 100,0 | 245,4 |

| | | |
|---|---|---|
| * Unter Feststoff werden hier alle Stoffe verstanden, die nicht Lösemittel sind. Lösemittel sind hier Aceton und Diisopropybenzol. ** (5-Ethyl-1 ,3-dioxan-5-yl)methylacrylat, von der Firma Sartomer-Arkema, Frankreich *** 3-Trimethoxysilylpropylmethacrylat, Fa. Evonik **** 50 gew.%ige Lösung von Diisopropylhydroperoxid in Diisopropylbenzol, Fa. Pergan | | |

### Beispiel 3, Lösung und reaktiver Klebstofffilm B

| | Gew.% Feststoff* | Einwaage (g) mit Lösemittel |
|---|---|---|
| Desmomelt^{®} 530 | 36,6 | |
| Desmomelt^{®} 530-Lösung in Aceton (20 Gew.% Desmomelt^{®} 530 in Aceton) | | 183,0 |
| SR 531 ** | 45,2 | 45,2 |
| N-Vinylcaprolactam | 12,2 | 12,2 |
| Di(trimethyolpropan)tetraacrylat | 3,7 | 3,7 |
| Dynasylan^{®} Memo*** | 1,2 | 1,2 |
| Eisen(II)-phthalocyanin | 1,1 | 1,1 |
| Summe | 100,0 | 246,4 |

| | | |
|---|---|---|
| * Unter Feststoff werden hier alle Stoffe verstanden, die nicht Lösemittel sind. Lösemittel ist hier Aceton. ** (5-Ethyl-1 ,3-dioxan-5-yl)methylacrylat, von der Firma Sartomer-Arkema, Frankreich *** 3-Trimethoxysilylpropylmethacrylat, Fa. Evonik | | |

### Beispiel 4, Lösung und reaktiver Klebstofffilm A

| | Gew.% Feststoff* | Einwaage (g) mit Lösemittel |
|---|---|---|
| Desmomelt^{®} 530 | 34,9 | |
| Desmomelt^{®} 530-Lösung in Aceton (20 Gew.% Desmomelt^{®} 530 in Aceton) | | 174,5 |
| SR 421A** | 43,0 | 43,0 |
| N-Vinylcaprolactam | 11,6 | 11,6 |
| Di(trimethyolpropan)tetraacrylat | 3,5 | 3,5 |
| Dynasylan^{®} Memo*** | 1,2 | 1,2 |
| Diisopropylhydroperoxid | 5,8 | |
| Peroxan^{®} IHP-50**** | | 11,6 |
| Summe | 100,0 | 245,4 |

| | | |
|---|---|---|
| * Unter Feststoff werden hier alle Stoffe verstanden, die nicht Lösemittel sind. Lösemittel sind hier Aceton und Diisopropybenzol. ** 3,3,5-Trimethylcyclohexylmethacrylat, Fa. Sartomer-Arkema, Frankreich *** 3-Trimethoxysilylpropylmethacrylat, Fa. Evonik **** 50 gew.%ige Lösung von Diisopropylhydroperoxid in Diisopropylbenzol, Fa. Pergan | | |

### Beispiel 4, Lösung und reaktiver Klebstofffilm B

| | Gew.% Feststoff* | Einwaage (g) mit Lösemittel |
|---|---|---|
| Desmomelt^{®} 530 | 36,6 | |
| Desmomelt^{®} 530-Lösung in Aceton (20 Gew.% Desmomelt^{®} 530 in Aceton) | | 183,0 |
| SR 421A** | 45,2 | 45,2 |
| N-Vinylcaprolactam | 12,2 | 12,2 |
| Di(trimethyolpropan)tetraacrylat | 3,7 | 3,7 |
| Dynasylan^{®} Memo*** | 1,2 | 1,2 |
| Eisen(II)-phthalocyanin | 1,1 | 1,1 |
| Summe | 100,0 | 246,4 |

| | | |
|---|---|---|
| * Unter Feststoff werden hier alle Stoffe verstanden, die nicht Lösemittel sind. Lösemittel ist hier Aceton. ** 3,3,5-Trimethylcyclohexylmethacrylat, Fa. Sartomer-Arkema, Frankreich *** 3-Trimethoxysilylpropylmethacrylat, Fa. Evonik | | |

### Beispiel 5, Lösung und reaktiver Klebstofffilm A

| | Gew.% Feststoff* | Einwaage (g) mit Lösemittel |
|---|---|---|
| Desmomelt^{®} 530 | 34,9 | |
| Desmomelt^{®} 530-Lösung in Aceton (20 Gew.% Desmomelt^{®} 530 in Aceton) | | 174,5 |
| SR 218** | 43,0 | 43,0 |
| N-Vinylcaprolactam | 11,6 | 11,6 |
| Di(trimethyolpropan)tetraacrylat | 3,5 | 3,5 |
| Dynasylan^{®} Memo*** | 1,2 | 1,2 |
| Diisopropylhydroperoxid | 5,8 | |
| Peroxan^{®} IHP-50**** | | 11,6 |
| Summe | 100,0 | 245,4 |

| | | |
|---|---|---|
| * Unter Feststoff werden hier alle Stoffe verstanden, die nicht Lösemittel sind. Lösemittel sind hier Aceton und Diisopropybenzol. ** 4-(1,1-dimethylethyl)cyclohexylmethacrylat, Fa. Sartomer-Arkema, Frankreich *** 3-Trimethoxysilylpropylmethacrylat, Fa. Evonik **** 50 gew.%ige Lösung von Diisopropylhydroperoxid in Diisopropylbenzol, Fa. Pergan | | |

### Beispiel 5, Lösung und reaktiver Klebstofffilm B

| | Gew.% Feststoff* | Einwaage (g) mit Lösemittel |
|---|---|---|
| Desmomelt^{®} 530 | 36,6 | |
| Desmomelt^{®} 530-Lösung in Aceton (20 Gew.% Desmomelt^{®} 530 in Aceton) | | 183,0 |
| SR 218** | 45,2 | 45,2 |
| N-Vinylcaprolactam | 12,2 | 12,2 |
| Di(trimethyolpropan)tetraacrylat | 3,7 | 3,7 |
| Dynasylan^{®} Memo*** | 1,2 | 1,2 |
| Eisen(II)-phthalocyanin | 1,1 | 1,1 |
| Summe | 100,0 | 246,4 |

| | | |
|---|---|---|
| * Unter Feststoff werden hier alle Stoffe verstanden, die nicht Lösemittel sind. Lösemittel ist hier Aceton. ** 4-(1,1-dimethylethyl)cyclohexylmethacrylat, Fa. Sartomer-Arkema, Frankreich *** 3-Trimethoxysilylpropylmethacrylat, Fa. Evonik | | |

### Beispiel 6, Lösung und reaktiver Klebstofffilm A

| | Gew.% Feststoff* | Einwaage (g) mit Lösemittel |
|---|---|---|
| Desmomelt^{®} 530 | 34,9 | |
| Desmomelt^{®} 530-Lösung in Aceton (20 Gew.% Desmomelt^{®} 530 in Aceton) | | 174,5 |
| SR 411 ** | 43,0 | 43,0 |
| N-Vinylcaprolactam | 11,6 | 11,6 |
| Di(trimethyolpropan)tetraacrylat | 3,5 | 3,5 |
| Dynasylan^{®} Memo*** | 1,2 | 1,2 |
| Diisopropylhydroperoxid | 5,8 | |
| Peroxan^{®} IHP-50**** | | 11,6 |
| Summe | 100,0 | 245,4 |

| | | |
|---|---|---|
| * Unter Feststoff werden hier alle Stoffe verstanden, die nicht Lösemittel sind. Lösemittel sind hier Aceton und Diisopropybenzol. ** Ethoxyliertes (n=4) Phenylmethacrylat, Fa. Sartomer-Arkema, Frankreich *** 3-Trimethoxysilylpropylmethacrylat, Fa. Evonik **** 50 gew.%ige Lösung von Diisopropylhydroperoxid in Diisopropylbenzol, Fa. Pergan | | |

### Beispiel 6, Lösung und reaktiver Klebstofffilm B

| | Gew.% Feststoff* | Einwaage (g) mit Lösemittel |
|---|---|---|
| Desmomelt^{®} 530 | 36,6 | |
| Desmomelt^{®} 530-Lösung in Aceton (20 Gew.% Desmomelt^{®} 530 in Aceton) | | 183,0 |
| SR 411 ** | 45,2 | 45,2 |
| N-Vinylcaprolactam | 12,2 | 12,2 |
| Di(trimethyolpropan)tetraacrylat | 3,7 | 3,7 |
| Dynasylan^{®} Memo*** | 1,2 | 1,2 |
| Eisen(II)-phthalocyanin | 1,1 | 1,1 |
| Summe | 100,0 | 246,4 |

| | | |
|---|---|---|
| * Unter Feststoff werden hier alle Stoffe verstanden, die nicht Lösemittel sind. Lösemittel ist hier Aceton. ** Ethoxyliertes (n=4) Phenylmethacrylat, Fa. Sartomer-Arkema, Frankreich *** 3-Trimethoxysilylpropylmethacrylat, Fa. Evonik | | |

### Beispiel 7, Lösung und reaktiver Klebstofffilm A

| | Gew.% Feststoff* | Einwaage (g) mit Lösemittel |
|---|---|---|
| Desmomelt^{®} 530 | 34,9 | |
| Desmomelt^{®} 530-Lösung in Aceton (20 Gew.% Desmomelt^{®} 530 in Aceton) | | 174,5 |
| SR 410 ** | 43,0 | 43,0 |
| N-Vinylcaprolactam | 11,6 | 11,6 |
| Di(trimethyolpropan)tetraacrylat | 3,5 | 3,5 |
| Dynasylan^{®} Memo*** | 1,2 | 1,2 |
| Diisopropylhydroperoxid | 5,8 | |
| Peroxan^{®} IHP-50**** | | 11,6 |
| Summe | 100,0 | 245,4 |

| | | |
|---|---|---|
| * Unter Feststoff werden hier alle Stoffe verstanden, die nicht Lösemittel sind. Lösemittel sind hier Aceton und Diisopropybenzol. ** Ethoxyliertes (n=4) Phenylacrylat, Fa. Sartomer-Arkema, Frankreich *** 3-Trimethoxysilylpropylmethacrylat, Fa. Evonik **** 50 gew.%ige Lösung von Diisopropylhydroperoxid in Diisopropylbenzol, Fa. Pergan | | |

### Beispiel 7, Lösung und reaktiver Klebstofffilm B

| | Gew.% Feststoff* | Einwaage (g) mit Lösemittel |
|---|---|---|
| Desmomelt^{®} 530 | 36,6 | |
| Desmomelt^{®} 530-Lösung in Aceton (20 Gew.% Desmomelt^{®} 530 in Aceton) | | 183,0 |
| SR 410 ** | 45,2 | 45,2 |
| N-Vinylcaprolactam | 12,2 | 12,2 |
| Di(trimethyolpropan)tetraacrylat | 3,7 | 3,7 |
| Dynasylan^{®} Memo*** | 1,2 | 1,2 |
| Eisen(II)-phthalocyanin | 1,1 | 1,1 |
| Summe | 100,0 | 246,4 |

| | | |
|---|---|---|
| * Unter Feststoff werden hier alle Stoffe verstanden, die nicht Lösemittel sind. Lösemittel ist hier Aceton. ** Ethoxyliertes (n=4) Phenylacrylat, Fa. Sartomer-Arkema, Frankreich *** 3-Trimethoxysilylpropylmethacrylat, Fa. Evonik | | |

### Beispiel 8, Lösung und reaktiver Klebstofffilm A

| | Gew.% Feststoff* | Einwaage (g) mit Lösemittel |
|---|---|---|
| Desmomelt^{®} 530 | 34,9 | |
| Desmomelt^{®} 530-Lösung in Aceton (20 Gew.% Desmomelt^{®} 530 in Aceton) | | 174,5 |
| SR 504 D** | 43,0 | 43,0 |
| N-Vinylcaprolactam | 11,6 | 11,6 |
| Di(trimethyolpropan)tetraacrylat | 3,5 | 3,5 |
| Dynasylan^{®} Memo*** | 1,2 | 1,2 |
| Diisopropylhydroperoxid | 5,8 | |
| Peroxan^{®} IHP-50**** | | 11,6 |
| Summe | 100,0 | 245,4 |

| | | |
|---|---|---|
| * Unter Feststoff werden hier alle Stoffe verstanden, die nicht Lösemittel sind. Lösemittel sind hier Aceton und Diisopropybenzol. ** Ethoxyliertes (n=4) Nonylphenylacrylat, Fa. Sartomer-Arkema, Frankreich *** 3-Trimethoxysilylpropylmethacrylat, Fa. Evonik **** 50 gew.%ige Lösung von Diisopropylhydroperoxid in Diisopropylbenzol, Fa. Pergan | | |

### Beispiel 8, Lösung und reaktiver Klebstofffilm B

| | Gew.% Feststoff* | Einwaage (g) mit Lösemittel |
|---|---|---|
| Desmomelt^{®} 530 | 36,6 | |
| Desmomelt^{®} 530-Lösung in Aceton (20 Gew.% Desmomelt^{®} 530 in Aceton) | | 183,0 |
| SR 504 D** | 45,2 | 45,2 |
| N-Vinylcaprolactam | 12,2 | 12,2 |
| Di(trimethyolpropan)tetraacrylat | 3,7 | 3,7 |
| Dynasylan^{®} Memo*** | 1,2 | 1,2 |
| Eisen(II)-phthalocyanin | 1,1 | 1,1 |
| Summe | 100,0 | 246,4 |

| | | |
|---|---|---|
| * Unter Feststoff werden hier alle Stoffe verstanden, die nicht Lösemittel sind. Lösemittel ist hier Aceton. ** Ethoxyliertes (n=4) Nonylphenylacrylat, Fa. Sartomer-Arkema, Frankreich *** 3-Trimethoxysilylpropylmethacrylat, Fa. Evonik | | |

### Beispiel 9, Lösung und reaktiver Klebstofffilm A

| | Gew.% Feststoff* | Einwaage (g) mit Lösemittel |
|---|---|---|
| Desmomelt^{®} 530 | 41,7 | |
| Desmomelt^{®} 530-Lösung in Aceton (20 Gew.% Desmomelt^{®} 530 in Aceton) | | 208,5 |
| 4-Acryloylmorpholin | 51,4 | 51,4 |
| Diisopropylhydroperoxid | 6,9 | |
| Peroxan^{®} IHP-50** | | 13,8 |
| Summe | 100,0 | 273,7 |

| | | |
|---|---|---|
| * Unter Feststoff werden hier alle Stoffe verstanden, die nicht Lösemittel sind. Lösemittel sind hier Aceton und Diisopropybenzol. ** 50 gew.%ige Lösung von Diisopropylhydroperoxid in Diisopropylbenzol, Fa. Pergan | | |

### Beispiel 9, Lösung und reaktiver Klebstofffilm B

| | Gew.% Feststoff* | Einwaage (g) mit Lösemittel |
|---|---|---|
| Desmomelt^{®} 530 | 44,2 | |
| Desmomelt^{®} 530-Lösung in Aceton (20 Gew.% Desmomelt^{®} 530 in Aceton) | | 221,0 |
| 4-Acryloylmorpholin | 54,5 | 54,5 |
| Eisen(II)-phthalocyanin | 1,3 | 1,3 |
| Summe | 100,0 | 276,8 |

| | | |
|---|---|---|
| * Unter Feststoff werden hier alle Stoffe verstanden, die nicht Lösemittel sind. Lösemittel ist hier Aceton. | | |

### Beispiel 10, Lösung und reaktiver Klebstofffilm A

| | Gew.% Feststoff* | Einwaage (g) mit Lösemittel |
|---|---|---|
| Desmomelt^{®} 530 | 41,7 | |
| Desmomelt^{®} 530-Lösung in Aceton (20 Gew.% Desmomelt^{®} 530 in Aceton) | | 208,5 |
| 4-Methacryloylmorpholin | 51,4 | 51,4 |
| Diisopropylhydroperoxid | 6,9 | |
| Peroxan^{®} IHP-50** | | 13,8 |
| Summe | 100,0 | 273,7 |

| | | |
|---|---|---|
| * Unter Feststoff werden hier alle Stoffe verstanden, die nicht Lösemittel sind. Lösemittel sind hier Aceton und Diisopropybenzol. ** 50 gew.%ige Lösung von Diisopropylhydroperoxid in Diisopropylbenzol, Fa. Pergan | | |

### Beispiel 10, Lösung und reaktiver Klebstofffilm B

| | Gew.% Feststoff* | Einwaage (g) mit Lösemittel |
|---|---|---|
| Desmomelt^{®} 530 | 44,2 | |
| Desmomelt^{®} 530-Lösung in Aceton (20 Gew.% Desmomelt^{®} 530 in Aceton) | | 221,0 |
| 4-Methacryloylmorpholin | 54,5 | 54,5 |
| Eisen(II)-phthalocyanin | 1,3 | 1,3 |
| Summe | 100,0 | 276,8 |

| | | |
|---|---|---|
| * Unter Feststoff werden hier alle Stoffe verstanden, die nicht Lösemittel sind. Lösemittel ist hier Aceton. | | |

### Beispiel 11, Lösung und reaktiver Klebstofffilm A

| | Gew.% Feststoff* | Einwaage (g) mit Lösemittel |
|---|---|---|
| Desmomelt^{®} 530 | 41,7 | |
| Desmomelt^{®} 530-Lösung in Aceton (20 Gew.% Desmomelt^{®} 530 in Aceton) | | 208,5 |
| 2-Hydroxy-3-phenoxy-propylacrylat | 51,4 | 51,4 |
| Diisopropylhydroperoxid | 6,9 | |
| Peroxan^{®} IHP-50** | | 13,8 |
| Summe | 100,0 | 273,7 |

| | | |
|---|---|---|
| * Unter Feststoff werden hier alle Stoffe verstanden, die nicht Lösemittel sind. Lösemittel sind hier Aceton und Diisopropybenzol. ** 50 gew.%ige Lösung von Diisopropylhydroperoxid in Diisopropylbenzol, Fa. Pergan | | |

### Beispiel 11, Lösung und reaktiver Klebstofffilm B

| | Gew.% Feststoff* | Einwaage (g) mit Lösemittel |
|---|---|---|
| Desmomelt^{®} 530 | 44,2 | |
| Desmomelt^{®} 530-Lösung in Aceton (20 Gew.% Desmomelt^{®} 530 in Aceton) | | 221,0 |
| 2-Hydroxy-3-phenoxy-propylacrylat | 54,5 | 54,5 |
| Eisen(II)-phthalocyanin | 1,3 | 1,3 |
| Summe | 100,0 | 276,8 |

| | | |
|---|---|---|
| * Unter Feststoff werden hier alle Stoffe verstanden, die nicht Lösemittel sind. Lösemittel ist hier Aceton. | | |

### Beispiel 12, Lösung und reaktiver Klebstofffilm A

| | Gew.% Feststoff* | Einwaage (g) mit Lösemittel |
|---|---|---|
| Desmomelt^{®} 530 | 41,7 | |
| Desmomelt^{®} 530-Lösung in Aceton (20 Gew.% Desmomelt^{®} 530 in Aceton) | | 208,5 |
| 2-Hydroxy-3-phenoxy-propylmethacrylat | 51,4 | 51,4 |
| Diisopropylhydroperoxid | 6,9 | |
| Peroxan^{®} IHP-50** | | 13,8 |
| Summe | 100,0 | 273,7 |

| | | |
|---|---|---|
| * Unter Feststoff werden hier alle Stoffe verstanden, die nicht Lösemittel sind. Lösemittel sind hier Aceton und Diisopropybenzol. ** 50 gew.%ige Lösung von Diisopropylhydroperoxid in Diisopropylbenzol, Fa. Pergan | | |

### Beispiel 12, Lösung und reaktiver Klebstofffilm B

| | Gew.% Feststoff* | Einwaage (g) mit Lösemittel |
|---|---|---|
| Desmomelt^{®} 530 | 44,2 | |
| Desmomelt^{®} 530-Lösung in Aceton (20 Gew.% Desmomelt^{®} 530 in Aceton) | | 221,0 |
| 2-Hydroxy-3-phenoxy-propylmethacrylat | 54,5 | 54,5 |
| Eisen(II)-phthalocyanin | 1,3 | 1,3 |
| Summe | 100,0 | 276,8 |

| | | |
|---|---|---|
| * Unter Feststoff werden hier alle Stoffe verstanden, die nicht Lösemittel sind. Lösemittel ist hier Aceton. | | |

### Beispiel 13, Lösung und reaktiver Klebstofffilm A

| | Gew.% Feststoff* | Einwaage (g) mit Lösemittel |
|---|---|---|
| Desmomelt^{®} 530 | 41,7 | |
| Desmomelt^{®} 530-Lösung in Aceton (20 Gew.% Desmomelt^{®} 530 in Aceton) | | 208,5 |
| SR 421A** | 51,4 | 51,4 |
| Diisopropylhydroperoxid | 6,9 | |
| Peroxan^{®} IHP-50*** | | 13,8 |
| Summe | 100,0 | 273,7 |

| | | |
|---|---|---|
| * Unter Feststoff werden hier alle Stoffe verstanden, die nicht Lösemittel sind. Lösemittel sind hier Aceton und Diisopropybenzol. ** 3,3,5-Trimethylcyclohexylmethacrylat, Fa. Sartomer-Arkema, Frankreich *** 50 gew.%ige Lösung von Diisopropylhydroperoxid in Diisopropylbenzol, Fa. Pergan | | |

### Beispiel 13, Lösung und reaktiver Klebstofffilm B

| | Gew.% Feststoff* | Einwaage (g) mit Lösemittel |
|---|---|---|
| Desmomelt^{®} 530 | 44,2 | |
| Desmomelt^{®} 530-Lösung in Aceton (20 Gew.% Desmomelt^{®} 530 in Aceton) | | 221,0 |
| SR 421A** | 54,5 | 54,5 |
| Eisen(II)-phthalocyanin | 1,3 | 1,3 |
| Summe | 100,0 | 276,8 |

| | | |
|---|---|---|
| * Unter Feststoff werden hier alle Stoffe verstanden, die nicht Lösemittel sind. Lösemittel ist hier Aceton. ** 3,3,5-Trimethylcyclohexylmethacrylat, Fa. Sartomer-Arkema, Frankreich | | |

### Beispiel 14, Lösung und reaktiver Klebstofffilm A

| | Gew.% Feststoff* | Einwaage (g) mit Lösemittel |
|---|---|---|
| Desmomelt^{®} 530 | 41,7 | |
| Desmomelt^{®} 530-Lösung in Aceton | | 208,5 |
| (20 Gew.% Desmomelt^{®} 530 in Aceton) | | |
| SR 411** | 51,4 | 51,4 |
| Diisopropylhydroperoxid | 6,9 | |
| Peroxan^{®} IHP-50*** | | 13,8 |
| Summe | 100,0 | 273,7 |

| | | |
|---|---|---|
| * Unter Feststoff werden hier alle Stoffe verstanden, die nicht Lösemittel sind. Lösemittel sind hier Aceton und Diisopropybenzol. ** Ethoxyliertes (n=4) Phenylmethacrylat, Fa. Sartomer-Arkema, Frankreich *** 50 gew.%ige Lösung von Diisopropylhydroperoxid in Diisopropylbenzol, Fa. Pergan | | |

### Beispiel 14, Lösung und reaktiver Klebstofffilm B

| | Gew.% Feststoff* | Einwaage (g) mit Lösemittel |
|---|---|---|
| Desmomelt^{®} 530 | 44,2 | |
| Desmomelt^{®} 530-Lösung in Aceton (20 Gew.% Desmomelt^{®} 530 in Aceton) | | 221,0 |
| SR 411 ** | 54,5 | 54,5 |
| Eisen(II)-phthalocyanin | 1,3 | 1,3 |
| Summe | 100,0 | 276,8 |

| | | |
|---|---|---|
| * Unter Feststoff werden hier alle Stoffe verstanden, die nicht Lösemittel sind. Lösemittel ist hier Aceton. ** Ethoxyliertes (n=4) Phenylmethacrylat, Fa. Sartomer-Arkema, Frankreich | | |

### Beispiel 15, Lösung und reaktiver Klebstofffilm A

| | Gew.% Feststoff* | Einwaage (g) mit Lösemittel |
|---|---|---|
| Desmomelt^{®} 530 | 41,7 | |
| Desmomelt^{®} 530-Lösung in Aceton (20 Gew.% Desmomelt^{®} 530 in Aceton) | | 208,5 |
| SR 504 D ** | 51,4 | 51,4 |
| Diisopropylhydroperoxid | 6,9 | |
| Peroxan^{®} IHP-50*** | | 13,8 |
| Summe | 100,0 | 273,7 |

| | | |
|---|---|---|
| * Unter Feststoff werden hier alle Stoffe verstanden, die nicht Lösemittel sind. Lösemittel sind hier Aceton und Diisopropybenzol. ** Ethoxyliertes (n=4) Nonylphenylacrylat, Fa. Sartomer-Arkema, Frankreich *** 50 gew.%ige Lösung von Diisopropylhydroperoxid in Diisopropylbenzol, Fa. Pergan | | |

### Beispiel 15, Lösung und reaktiver Klebstofffilm B

| | Gew.% Feststoff* | Einwaage (g) mit Lösemittel |
|---|---|---|
| Desmomelt^{®} 530 | 44,2 | |
| Desmomelt^{®} 530-Lösung in Aceton | | 221,0 |
| (20 Gew.% Desmomelt^{®} 530 in Aceton) | | |
| SR 504 D** | 54,5 | 54,5 |
| Eisen(II)-phthalocyanin | 1,3 | 1,3 |
| Summe | 100,0 | 276,8 |

| | | |
|---|---|---|
| * Unter Feststoff werden hier alle Stoffe verstanden, die nicht Lösemittel sind. Lösemittel ist hier Aceton. ** Ethoxyliertes (n=4) Nonylphenylacrylat, Fa. Sartomer-Arkema, Frankreich | | |

### Vergleichsbeispiel 1, Lösung und reaktiver Klebstofffilm A

| | Gew.% Feststoff* | Einwaage (g) mit Lösemittel |
|---|---|---|
| Desmomelt^{®} 530 | 41,7 | |
| Desmomelt^{®} 530-Lösung in Aceton (20 Gew.% Desmomelt^{®} 530 in Aceton) | | 208,5 |
| SR 489** | 51,4 | 51,4 |
| Diisopropylhydroperoxid | 6,9 | |
| Peroxan^{®} IHP-50*** | | 13,8 |
| Summe | 100,0 | 273,7 |

| | | |
|---|---|---|
| * Unter Feststoff werden hier alle Stoffe verstanden, die nicht Lösemittel sind. Lösemittel sind hier Aceton und Diisopropybenzol. ** Tridecylacrylat (CAS-Nr.: 3076-04-8), Fa. Sartomer-Arkema, Frankreich *** 50 gew.%ige Lösung von Diisopropylhydroperoxid in Diisopropylbenzol, Fa. Pergan | | |

### Vergleichsbeispiel 1, Lösung und reaktiver Klebstofffilm B

| | Gew.% Feststoff* | Einwaage (g) mit Lösemittel |
|---|---|---|
| Desmomelt^{®} 530 | 44,2 | |
| Desmomelt^{®} 530-Lösung in Aceton (20 Gew.% Desmomelt^{®} 530 in Aceton) | | 221,0 |
| SR 489** | 54,5 | 54,5 |
| Eisen(II)-phthalocyanin | 1,3 | 1,3 |
| Summe | 100,0 | 276,8 |

| | | |
|---|---|---|
| * Unter Feststoff werden hier alle Stoffe verstanden, die nicht Lösemittel sind. Lösemittel ist hier Aceton. ** Tridecylacrylat (CAS-Nr.: 3076-04-8), Fa. Sartomer-Arkema, Frankreich | | |

### Vergleichsbeispiel 2, Lösung und reaktiver Klebstofffilm A

| | Gew.% Feststoff* | Einwaage (g) mit Lösemittel |
|---|---|---|
| Desmomelt^{®} 530 | 41,7 | |
| Desmomelt^{®} 530-Lösung in Aceton (20 Gew.% Desmomelt^{®} 530 in Aceton) | | 208,5 |
| Poly-(ethylenglycol)methylether methacrylat (Mₙ=500 g/mol), Fa. Sigma-Aldrich | 51,4 | 51,4 |
| Diisopropylhydroperoxid | 6,9 | |
| Peroxan^{®} IHP-50** | | 13,8 |
| Summe | 100,0 | 273,7 |

| | | |
|---|---|---|
| * Unter Feststoff werden hier alle Stoffe verstanden, die nicht Lösemittel sind. Lösemittel sind hier Aceton und Diisopropybenzol. ** 50 gew.%ige Lösung von Diisopropylhydroperoxid in Diisopropylbenzol, Fa. Pergan | | |

### Vergleichsbeispiel 2, Lösung und reaktiver Klebstofffilm B

| | Gew.% Feststoff* | Einwaage (g) mit Lösemittel |
|---|---|---|
| Desmomelt^{®} 530 | 44,2 | |
| Desmomelt^{®} 530-Lösung in Aceton (20 Gew.% Desmomelt^{®} 530 in Aceton) | | 221,0 |
| Poly-(ethylenglycol)methylether methacrylat (Mₙ=500 g/mol), Fa. Sigma-Aldrich | 54,5 | 54,5 |
| Eisen(II)-phthalocyanin | 1,3 | 1,3 |
| Summe | 100,0 | 276,8 |

| | | |
|---|---|---|
| * Unter Feststoff werden hier alle Stoffe verstanden, die nicht Lösemittel sind. Lösemittel ist hier Aceton. | | |

### Vergleichsbeispiel 3, Lösung und reaktiver Klebstofffilm A

| | Gew.% Feststoff* | Einwaage (g) mit Lösemittel |
|---|---|---|
| Desmomelt^{®} 530 | 41,7 | |
| Desmomelt^{®} 530-Lösung in Aceton (20 Gew.% Desmomelt^{®} 530 in Aceton) | | 208,5 |
| Di(trimethyolpropan)tetraacrylat | 51,4 | 51,4 |
| Diisopropylhydroperoxid | 6,9 | |
| Peroxan^{®} IHP-50** | | 13,8 |
| Summe | 100,0 | 273,7 |

| | | |
|---|---|---|
| * Unter Feststoff werden hier alle Stoffe verstanden, die nicht Lösemittel sind. Lösemittel sind hier Aceton und Diisopropybenzol. ** 50 gew.%ige Lösung von Diisopropylhydroperoxid in Diisopropylbenzol, Fa. Pergan | | |

### Vergleichsbeispiel 3, Lösung und reaktiver Klebstofffilm B

| | Gew.% Feststoff* | Einwaage (g) mit Lösemittel |
|---|---|---|
| Desmomelt^{®} 530 | 44,2 | |
| Desmomelt^{®} 530-Lösung in Aceton (20 Gew.% Desmomelt^{®} 530 in Aceton) | | 221,0 |
| Di(trimethyolpropan)tetraacrylat | 54,5 | 54,5 |
| Eisen(II)-phthalocyanin | 1,3 | 1,3 |
| Summe | 100,0 | 276,8 |

| | | |
|---|---|---|
| * Unter Feststoff werden hier alle Stoffe verstanden, die nicht Lösemittel sind. Lösemittel ist hier Aceton. | | |

### Zugscherfestigkeit

### Probenvorbereitung für die Bestimmung der Zugscherfestigkeit

Aus den zu untersuchenden reaktiven Klebstofffilmen A und B, die beidseitig jeweils mit einem Trennliner abgedeckt waren, wurden rechteckige Stanzlinge mit den Maßen 25,0 mm x 12,5 mm ausgestanzt. Die Trennpapiere wurden daraufhin jeweils von einer Seite eines Stanzlings abgezogen.

Die Stanzlinge der reaktiven Klebstofffilme A wurden passgenau jeweils auf das Ende eines ersten Polycarbonat-Prüfkörpers (von der Firma Rocholl, 74858 Aglasterhausen, Deutschland) mit den Maßen 100,0 mm x 25,0 mm x 5,0 mm aufgelegt. Die Stanzlinge hafteten nun jeweils auf diesem Prüfkörper. Anschließend wurde der noch auf den Stanzlingen verbliebene Trennliner abgezogen.

Die Stanzlinge der reaktiven Klebstofffilme B wurden mit der nicht abgedeckten Seite jeweils auf die auf den ersten Prüfkörpern haftenden Stanzlinge der reaktiven Klebstofffilme A gelegt, so dass jeder Stanzling des reaktiven Klebstofffilms B auf dem Stanzling des entsprechenden reaktiven Klebstofffilms A haftete. Nach diesem In-Kontakt-bringen von Stanzling A mit Stanzling B muss die anschließende Verklebung mit dem zweiten Polycarbonat-Prüfkörper innerhalb von maximal 15 Minuten erfolgen.

### Verklebung für die Bestimmung der Zugscherfestigkeit

Die zweiten Polycarbonat-Prüfkörper wurden jeweils mit einem Ende bündig auf die vorbereiteten, wie oben beschriebenen Proben, bestehend aus erstem Polycarbonat-Prüfkörper/ Stanzling A/ Stanzling B gelegt, so dass wie in DIN EN 1465 beschrieben, jeweils ein überlappender Verbund aus erstem Polycarbonat-Prüfkörper/ Stanzling A/ Stanzling B/ zweitem Polycarbonat-Prüfkörper resultierte. Die Überlappungslänge betrug jeweils 12,5 mm. Die Überlappungsfläche betrug jeweils 312,5 mm². Die überlappenden Verbunde aus erstem Prüfkörper / reagierendes Klebstoffsystem / zweitem Prüfkörper wurden auf einen Tisch gelegt. Auf den zweiten Prüfkörper wurde jeweils ein Gewicht von 2 kg gestellt. Der Verbund wurde dem permanenten Druck des Gewichtes jeweils 60 Sekunden bei Raumtemperatur ausgesetzt (Verpresszeit). Sodann wurde das Gewicht entfernt. Der Verbund wurde anschließend jeweils 3 Tage bei 23°C und 50% relativer Luftfeuchtigkeit gelagert. Dabei kam es zu einer allmählich voranschreitenden Härtungsreaktion innerhalb des Klebstoffsystems und zu einer sich allmählich verstärkenden Haftung zwischen dem jeweiligen Klebstoffsystem und den jeweiligen Polycarbonat-Prüfkörpern. Es kam somit zu einer Verklebung mit einer allmählichen Festigkeitszunahme über die Zeit, die über die ursprüngliche Festigkeit durch Haftklebewirkung deutlich hinausging. Sodann erfolgte die Bestimmung der Zugscherfestigkeit.

### Bestimmung der Zugscherfestigkeit

Die Bestimmung der Zugscherfestigkeit von Überlappungsverklebungen ermöglicht Aussagen über die Scherbelastbarkeit eines doppelseitig klebenden Klebeprodukts. Die Bestimmung erfolgte gemäß DIN EN 1465 mittels einer Zugprüfmaschine. Die Prüfgeschwindigkeit betrug 10 mm/min. Alle Messungen wurden in einem klimatisierten Raum bei 23°C und 50 % relativer Luftfeuchte durchgeführt.

### Push Out-Test

Der Push-out-Test ermöglicht Aussagen über die Verklebungsfestigkeit eines doppelseitig klebenden Klebeprodukts in Richtung der Klebschichtnormalen.

### Probenvorbereitung für den Push-Out-Test

Aus den zu untersuchenden reaktiven Klebstofffilmen A und B, die beidseitig jeweils mit einem Trennliner abgedeckt waren, wurden runde Stanzlinge mit einem Durchmesser von 21 mm ausgestanzt. Die Trennliner wurden daraufhin jeweils von einer Seite eines Stanzlings abgezogen. Die Stanzlinge A wurden passgenau jeweils auf eine runde, 5 mm dicke Probenscheibe aus Polycarbonat ("Disc", erstes Substrat, erster Prüfkörper) mit ebenfalls einem Durchmesser von 21 mm aufgelegt. Die Stanzlinge A hafteten nun jeweils an der "Disc". Anschließend wurde das noch auf den Stanzlingen verbliebene Trennpapier abgezogen. Die Discs waren somit nun mit den reaktiven Klebstofffilmen A ausgerüstet.

Die Stanzlinge der reaktiven Klebstofffilme B wurden mit der nicht abgedeckten Seite jeweils auf den auf der Disc haftenden Stanzling A gelegt, so dass die Stanzlinge B jeweils auf den Stanzlingen A hafteten. Nach dem In-Kontakt-bringen der Stanzlinge A mit den Stanzlingen B muss die anschließende Verklebung mit dem zweiten Substrat innerhalb von maximal 15 Minuten erfolgen, da die Härtungsreaktion nun voranschreitet.

Zur weiteren Vorbereitung der Verklebungen wurden jeweils die letzten noch auf den Stanzlingen B verbliebenen Trennliner abgezogen, so dass die Stanzlinge B jeweils offen lagen.

### Verklebung für den Push-Out-Test

Das zweite Substrat (zweiter Prüfkörper) war eine 5 mm dicke quadratische Lochplatte, die ebenfalls aus Polycarbonat bestand. Die Seitenlängen betrugen jeweils 40 mm. Das Loch war jeweils zentral angeordnet und rund, der Lochdurchmesser betrug 9 mm.

Die mit den aneinander haftendenden Stanzlingen A und B ausgerüsteten runden Probenkörper wurden mit der jeweils offen liegenden Seite der Stanzlinge derart auf der Lochplatte positioniert, dass das Zentrum des runden Probenkörpers und das Zentrum des Lochs der Lochplatte übereinander lagen. Anschließend wurde der durch die Haftklebrigkeit der Stanzlinge zusammengehaltene Verbund aus quadratischer Lochplatte, Stanzling A, Stanzling B und der Disc so auf einen Tisch gelegt, dass die quadratische Lochplatte unten lag. Auf die Disc wurde ein Gewicht von 2 kg gestellt. Der Verbund wurde dem permanenten Druck des Gewichtes 60 Sekunden (Verpresszeit) jeweils bei 23°C ausgesetzt. Sodann wurde das Gewicht entfernt. Der Verbund wurde anschließend 3 Tage bei 23°C und 50% relativer Luftfeuchtigkeit gelagert. Dabei kam es zu einer allmählich voranschreitenden Härtungsreaktion innerhalb der Stanzlinge und zu einer sich allmählich verstärkenden Haftung zwischen den Stanzlingen sowie zu den Substraten (Prüfkörpern). Es kam somit zu einer Verklebung mit einer allmählichen Festigkeitszunahme über die Zeit.

Sodann erfolgten die Push-Out-Tests.

### Durchführung des Push Out-Tests

Es wurde mittels eines in eine Zugprüfmaschine gespannten Dorns durch das Loch in der Lochplatte mit einer konstanten Geschwindigkeit von 10 mm/min senkrecht auf den runden Prüfkörper ("Disc") gedrückt (also parallel zum Normalenvektor auf die Prüfkörper-Ebene; mittig auf die Lochmitte zentriert), bis die Verklebung sich soweit löste, dass ein Druckabfall von 50 % registriert wurde. Der unmittelbar vor dem Druckabfall einwirkende Druck ist der Maximaldruck Pₘₐₓ. Dieser Wert entspricht dem in der Tabelle angegeben Push Out-Wert [N/mm²]. Alle Messungen wurden in einem klimatisierten Raum bei 23 °C und 50 % relativer Luftfeuchte durchgeführt.

### Ergebnisse

### Zugscherfestigkeit und Push-Out

| | Zugscherfestigkeit | Push-Out Ergebnis |
|---|---|---|
| | [MPa] | [MPa] |
| Beispiel 1 | 17,8 (M) | 8,3 (K) |
| Beispiel 2 | 15,4 (K) | 7,1 (K) |
| Beispiel 3 | 14,1 (K) | 6,8 (K) |
| Beispiel 4 | 8,5 (K) | 4,9 (K) |
| Beispiel 5 | 12,2 (K) | 6,6 (K) |
| Beispiel 6 | 10,6 (K) | 6,4 (K) |
| Beispiel 7 | 5,3 (K) | 3,8 (K) |
| Beispiel 8 | 7,3 (K) | 4,1 (K) |
| Beispiel 9 | 16,4 (K) | 7,6 (K) |
| Beispiel 10 | 16,1 (K) | 6,9 (K) |
| Beispiel 11 | 15,7 (K) | 6,1 (K) |
| Beispiel 12 | 16,2 (K) | 6,0 (K) |
| Beispiel 13 | 7,8 (K) | 4,1 (K) |
| Beispiel 14 | 8,1 (K) | 5,0 (K) |
| Beispiel 15 | 6,3 (K) | 3,8 (K) |
| | | |
| Vergleichsbeispiel 1 | 0,1 (K) | 0,1 (K) |
| Vergleichsbeispiel 2 | 1,8 (K) | 0,4 (K) |
| Vergleichsbeispiel 3 | 1,7 (K) | 0,3 (K) |

| | | |
|---|---|---|
| Bruchbilder: A=Adhäsiv K=Kohäsiv M=Materialbruch | | |

### Diskussion der Ergebnisse

Das erfindungsgemäße 2-Komponentenklebesystem in Filmform stellt sowohl hinsichtlich des Geruchs als auch im Hinblick auf die Verklebungsfestigkeit eine deutliche Verbesserung gegenüber dem Stand der Technik dar. Die Beispiele verdeutlichen, dass mit den erfindungsgemäß ausgewählten, nicht oder nur schwach riechenden Acrylmonomeren überraschend hohe Verklebungsfestigkeiten sowohl im Zugscherfestigkeitstest als auch im Push-Out-Test, erzielbar sind. Die Ergebnisse der Vergleichsbeispiele zeigen, dass mit anderen als den erfindungsgemäß ausgewählten reaktiven Monomeren nur sehr geringe Verklebungsfestigkeiten erzielt werden.

## Patentansprüche

1. Reaktiver Klebstofffilm, umfassend (a) eine polymere Filmbildner-Matrix, (b) ein oder mehrere reaktive Monomere (M₍₁₎-M₍ₙ₎) und (c) ein Reagens, ausgewählt aus einem Initiator, insbesondere Radikalinitiator, oder einem Aktivator, **dadurch gekennzeichnet, dass**
das eine oder die mehreren reaktiven Monomere (M₍₁₎-M₍ₙ₎) ausgewählt sind aus den Gruppen (b1) bis (b4):
(b1):
4-Acryloylmorpholin, 4-Methacryloylmorpholin, 2-Hydroxy-3-phenoxy-propylacrylat, 2-Hydroxy-3-phenoxy-propylmethacrylat, (5-Ethyl-1,3-dioxan-5-yl)methylacrylat;
(b2):
3,3,5-Trimethylcyclohexylmethacrylat, 4-(1,1-dimethylethyl)cyclohexylmethacrylat;
(b3):
ein Poly(ethylenglykol)phenylethermethacrylat der allgemeinen Formel (I): 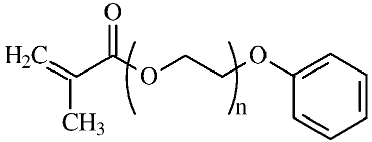 wobei n= 2 bis 10 ist;
ein an der Phenylgruppe einfach oder mehrfach alkylsubstituiertes Poly(ethylenglykol)phenylethermethacrylat der allgemeinen Formel (II): 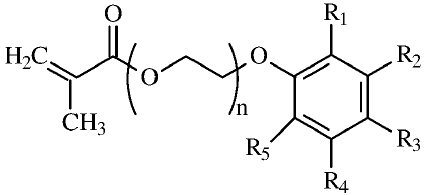 wobei n= 2 bis 10 ist; und R₁, R₂, R₃, R₄, R₅ unabhängig voneinander H oder C₁-C₁₄-Alkyl darstellen;
(b4):
ein Poly(ethylenglykol)phenyletheracrylat der allgemeinen Formel (III): 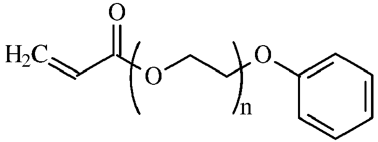 wobei n= 2 bis 10 ist;
ein an der Phenylgruppe einfach oder mehrfach alkylsubstituiertes Poly(ethylenglykol)phenyletheracrylat der allgemeinen Formel (IV): 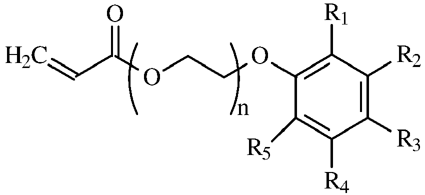
wobei n= 2 bis 10 ist; und R₁, R₂, R₃, R₄, R₅ unabhängig voneinander H oder C₁-C₁₄-Alkyl darstellen;
der Gesamtanteil des einen oder der mehreren reaktiven Monomere (M₍₁₎-M₍ₙ₎) ausgewählt aus den Gruppen (b1) bis (b4) an allen in dem reaktiven Klebstofffilm enthaltenen reaktiven Monomeren mindestens 50 Gewichtsprozente beträgt;
und dass die polymere Filmbildner-Matrix (a) ein thermoplastisches Polyurethan umfasst.

2. Reaktiver Klebstofffilm nach Anspruch 1, **dadurch gekennzeichnet, dass** das eine oder die mehreren reaktiven Monomere (M₍₁₎-M₍ₙ₎) ausgewählt sind aus den Gruppen (b1) bis (b3), bevorzugt aus den Gruppen (b1) bis (b2), besonders bevorzugt aus der Gruppe (b1) und deren Gesamtanteil an allen in dem reaktiven Klebstofffilm enthaltenen reaktiven Monomeren mindestens 50 Gewichtsprozente beträgt.

3. Reaktiver Klebstofffilm nach einem der Ansprüche 1 oder 2, **dadurch gekennzeichnet, dass** der Gesamtanteil des einen oder der mehreren reaktiven Monomere (M₍₁₎-M₍ₙ₎) an allen in dem reaktiven Klebstofffilm enthaltenen reaktiven Monomeren mindestens 60 Gewichtsprozente, bevorzugt mindestens 70 Gewichtsprozente beträgt.

4. Reaktiver Klebstofffilm nach einem der vorhergehenden Ansprüche, **dadurch gekennzeichnet, dass** der Anteil an Monomeren, ausgewählt aus den folgenden Gruppen (x1) bis (x4), an allen in dem reaktiven Klebstoff enthaltenen reaktiven Monomeren in Summe kleiner 2,0 Gewichtsprozent, bevorzugt kleiner 0,2 Gewichtsprozent, besonders bevorzugt 0 Gewichtsprozent beträgt, wobei die Gruppen (x1) bis (x4) jeweils aus den folgenden Monomeren bestehen:
(x1): Acrylsäure, Methylacrylat, Ethylacrylat, Propylacrylat, Butylacrylat, Pentylacrylat, Hexylacrylat, Methacrylsäure, Methylmethacrylat, Ethylmethacrylat, Propylmethacrylat, Butylmethacrylat, Pentylmethacrylat, Hexylmethacrylat, jeweils in allen isomeren Formen;
(x2): Phenylacrylat, Benzylacrylat, methylsubstituierte Phenylacrylate, methylsubstituierte Benzylacrylate, Phenylmethacrylat, Benzylmethacrylat, methylsubstituierte Phenylmethacrylate, methylsubstituierte Benzylmethacrylate, jeweils in allen isomeren Formen;
(x3): Hydroxyethylacrylat, Hydroxypropylacrylat, Hydroxybutylacrylat, Methoxyethylacrylat, Methoxypropylacrylat, Methoxybutylacrylat, Ethoxyethylacrylat, Ethoxypropylacrylat, Ethoxybutylacrylat, Phenoxyethylacrylat, Hydroxyethylmethacrylat, Hydroxypropylmethacrylat, Hydroxybutylmethacrylat, Methoxyethylmethacrylat, Methoxypropylmethacrylat, Methoxybutylmethacrylat, Ethoxyethylmethacrylat, Ethoxypropylmethacrylat, Ethoxybutylmethacrylat, Phenoxyethylmethacrylat, jeweils in allen isomeren Formen;
(x4): Tetrahydrofurfurylacrylat, Tetrahydrofurfurylmethacrylat.

5. Reaktiver Klebstofffilm nach einem der vorhergehenden Ansprüche, **dadurch gekennzeichnet, dass**
der Radikalinitiator ein Peroxid, vorzugsweise ein Hydroperoxid, besonders bevorzugt Diisopropylbenzol-hydroperoxid umfasst.

6. Reaktiver Klebstofffilm nach einem der vorhergehenden Ansprüche, **dadurch gekennzeichnet, dass**
der Aktivator ein Dihydropyridin-Derivat oder ein Übergangsmetallkomplex, vorzugsweise ein Übergangsmetall-Phthalocyanin-Komplex, besonders bevorzugt Eisen(II)-phthalocyanin, umfasst.

7. Reaktiver Klebstofffilm nach einem der vorhergehenden Ansprüche, **dadurch gekennzeichnet, dass**
er haftklebrige Eigenschaften besitzt.

8. Reaktiver Klebstofffilm nach einem der vorhergehenden Ansprüche, umfassend
(I) 10 bis 90 Gew. % polymere Filmbildner-Matrix, 10 bis 90 Gew. % mindestens eines reaktiven Monomers und 1 bis 20 Gew. % Radikalinitiator, vorzugsweise 20 bis 50 Gew. % polymere Filmbildner-Matrix, 40 bis 70 Gew. % mindestens eines reaktiven Monomers und 5 bis 15 Gew. % Radikalinitiator; oder
(II) 10 bis 90 Gew. % polymere Filmbildner-Matrix, 10 bis 90 Gew. % mindestens eines reaktiven Monomers und größer 0 bis 10 Gew. % Aktivator, vorzugsweise 20 bis 50 Gew. % polymere Filmbildner-Matrix, 40 bis 70 Gew. % mindestens eines reaktiven Monomers und 0,1 bis 5 Gew. % Aktivator.

9. Reaktives Klebstofffilm-System, umfassend zwei reaktive Klebstofffilme nach einem der vorhergehenden Ansprüche, **dadurch gekennzeichnet, dass** der erste reaktive Klebstofffilm einen Radikalinitiator enthält und der zweite reaktive Klebstofffilm einen Aktivator enthält.

10. Reaktives Klebstofffilm-System, umfassend zwei oder mehrere reaktive Klebstofffilme nach einem der Ansprüche 1 bis 8, **dadurch gekennzeichnet, dass** ein erster reaktiver Klebstofffilm einen Radikalinitiator enthält und ein zweiter reaktiver Klebstofffilm einen Aktivator enthält und diese beiden reaktiven Klebstofffilme jeweils abwechselnd vorliegen.

11. Reaktives Klebstofffilm-System nach Anspruch 9 oder 10, umfassend weitere Filme, Schichten, Klebstoffe, Träger, Trennpapier und/oder Trennliner.

12. Verwendung eines reaktiven Klebstofffilms nach einem der Ansprüche 1 bis 8 und/oder eines reaktiven Klebstofffilm-Systems nach einem der Ansprüche 9 bis 11 zur Verklebung von Materialien aus Metall, Holz, Glas und/oder Kunststoffen.

13. Verfahren zur Herstellung eines reaktiven Klebstofffilms nach einem der Ansprüche 1 bis 8, wobei das Verfahren die folgenden Schritte umfasst:
1. Auflösen und/oder Feinverteilen der Inhaltsstoffe in einem oder mehreren Lösemittel(n) und/oder Wasser,
2. Mischen der aufgelösten oder feinverteilten Inhaltsstoffe,
3. Beschichten eines Trennliners oder -papiers, eines Trägermaterials oder eines Haftklebstoffs mit der Mischung aufgelöster oder verteilter Inhaltsstoffe nach Schritt 2,
4. Verdunsten des Lösemittels und/oder Wassers und
5. Gegebenenfalls Aufwickeln des reaktiven Klebstofffilms zu einer Rolle,
wobei die Inhaltsstoffe (a) eine polymere Filmbildner-Matrix, (b) mindestens ein reaktives Monomer, (c) ein Reagens, ausgewählt aus einem Initiator, insbesondere Radikalinitiator, oder einem Aktivator, sowie gegebenenfalls weitere Additive und/oder Hilfsstoffe umfassen.

14. Kit zur Bereitstellung eines Zweikomponenten-Klebstofffilm-Systems, umfassend
(i) mindestens einen ersten reaktiven Klebstofffilm nach einem der Ansprüche 1 bis 8, der einen Radikalinitiator enthält, und
(ii) mindestens einen zweiten reaktiven Klebstofffilm nach einem der Ansprüche 1 bis 8, der einen Aktivator enthält.

15. Verbundkörper, der durch das reaktive Klebstofffilm-System nach einem der Ansprüche 9 bis 11 oder durch das Kit nach Anspruch 14 verbunden ist.

## Claims

1. Reactive adhesive film comprising (a) a polymeric film-former matrix, (b) one or more reactive monomers (M₍₁₎-M₍ₙ₎) and (c) a reagent selected from an initiator, more particularly a radical initiator, or an activator, **characterized in that**
the one or the two or more reactive monomers (M₍₁₎-M₍ₙ₎) are selected from the groups (b1) to (b4):
(b1) :
4-acryloylmorpholine, 4-methacryloylmorpholine, 2-hydroxy-3-phenoxypropyl acrylate, 2-hydroxy-3-phenoxypropyl methacrylate, (5-ethyl-1,3-dioxan-5-yl)methyl acrylate;
(b2) :
3,3,5-trimethylcyclohexyl methacrylate, 4-(1,1-dimethylethyl)cyclohexyl methacrylate;
(b3) :
a poly(ethylene glycol) phenyl ether methacrylate of the general formula (I): 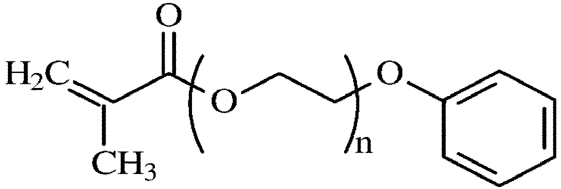 where n is 2 to 10;
a poly(ethylene glycol) phenyl ether methacrylate with single or multiple alkyl substitution on the phenyl group, of the general formula (II): 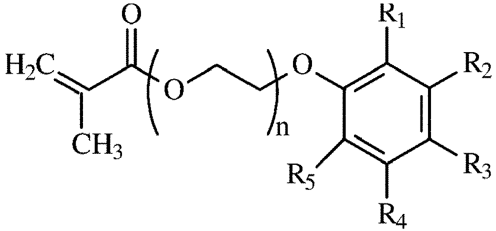 where n is 2 to 10 and R₁, R₂, R₃, R₄ and R₅ independently of one another are H or C₁-C₁₄ alkyl;
(b4) :
a poly(ethylene glycol) phenyl ether acrylate of the general formula (III): 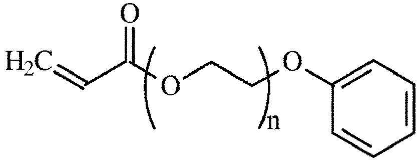 where n is 2 to 10;
a poly(ethylene glycol) phenyl ether acrylate with single or multiple alkyl substitution on the phenyl group, of the general formula (IV): 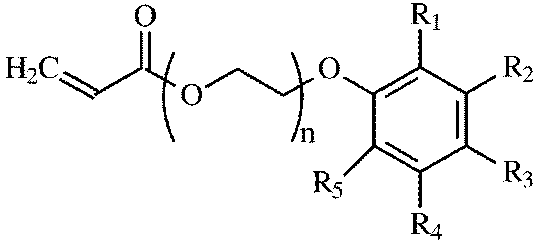 where n is 2 to 10 and R₁, R₂, R₃, R₄ and R₅ independently of one another are H or C₁-C₁₄ alkyl;
the total fraction of the one or of the two or more reactive monomers (M₍₁₎-M₍ₙ₎) selected from the groups (b1) to (b4) among all reactive monomers contained in the reactive adhesive film is at least 50 per cent by weight;
and **in that** the polymeric film-former matrix (a) comprises a thermoplastic polyurethane.

2. Reactive adhesive film according to Claim 1, **characterized in that** the one or the two or more reactive monomers (M₍₁₎-M₍ₙ₎) are selected from the groups (b1) to (b3), preferably from the groups (b1) to (b2), more preferably from the group (b1), and their total fraction among all reactive monomers contained in the reactive adhesive film is at least 50 per cent by weight.

3. Reactive adhesive film according to either of Claims 1 and 2, **characterized in that** the total fraction of the one or of the two or more reactive monomers (M₍₁₎-M₍ₙ₎) among all reactive monomers contained in the reactive adhesive film is at least 60 per cent by weight, preferably at least 70 per cent by weight.

4. Reactive adhesive film according to any of the preceding claims, **characterized in that** the fraction of monomers selected from the following groups (x1) to (x4) among all reactive monomers contained in the reactive adhesive is in total less than 2.0 per cent by weight, preferably less than 0.2 per cent by weight, more preferably 0 per cent by weight, the groups (x1) to (x4) each consisting of the following monomers:
(x1): acrylic acid, methyl acrylate, ethyl acrylate, propyl acrylate, butyl acrylate, pentyl acrylate, hexyl acrylate, methacrylic acid, methyl methacrylate, ethyl methacrylate, propyl methacrylate, butyl acrylate, pentyl methacrylate, hexyl methacrylate, in each case in all isomeric forms;
(x2): phenyl acrylate, benzyl acrylate, methyl-substituted phenyl acrylates, methyl-substituted benzyl acrylates, phenyl methacrylate, benzyl methacrylate, methyl-substituted phenyl methacrylates, methyl-substituted benzyl methacrylates, in each case in all isomeric forms;
(x3): hydroxyethyl acrylate, hydroxypropyl acrylate, hydroxybutyl acrylate, methoxyethyl acrylate, methoxypropyl acrylate, methoxybutyl acrylate, ethoxyethyl acrylate, ethoxypropyl acrylate, ethoxybutyl acrylate, phenoxyethyl acrylate, hydroxyethyl methacrylate, hydroxypropyl methacrylate, hydroxybutyl methacrylate, methoxyethyl methacrylate, methoxypropyl methacrylate, methoxybutyl methacrylate, ethoxyethyl methacrylate, ethoxypropyl methacrylate, ethoxybutyl methacrylate, phenoxyethyl methacrylate, in each case in all isomeric forms;
(x4): tetrahydrofurfuryl acrylate, tetrahydrofurfuryl methacrylate.

5. Reactive adhesive film according to any of the preceding claims, **characterized in that**
the radical initiator comprises a peroxide, preferably a hydroperoxide, more preferably diisopropylbenzene hydroperoxide.

6. Reactive adhesive film according to any of the preceding claims, **characterized in that**
the activator comprises a dihydropyridine derivative or a transition metal complex, preferably a transition metal-phthalocyanine complex, more preferably iron(II)-phthalocyanine.

7. Reactive adhesive film according to any of the preceding claims, **characterized in that**
it possesses pressure-sensitive adhesive properties.

8. Reactive adhesive film according to any of the preceding claims, comprising
(I) 10% to 90% by weight of polymeric film-former matrix, 10% to 90% by weight of at least one reactive monomer and 1% to 20% by weight of radical initiator, preferably 20% to 50% by weight of polymeric film-former matrix, 40% to 70% by weight of at least one reactive monomer and 5% to 15% by weight of radical initiator; or
(II) 10% to 90% by weight of polymeric film-former matrix, 10% to 90% by weight of at least one reactive monomer and greater than 0% to 10% by weight of activator, preferably 20% to 50% by weight of polymeric film-former matrix, 40% to 70% by weight of at least one reactive monomer and 0.1% to 5% by weight of activator.

9. Reactive adhesive film system comprising two reactive adhesive films according to any of the preceding claims, **characterized in that**
the first reactive adhesive film comprises a radical initiator and the second reactive adhesive film comprises an activator.

10. Reactive adhesive film system comprising two or more reactive adhesive films according to any of Claims 1 to 8, **characterized in that**
a first reactive adhesive film comprises a radical initiator and a second reactive adhesive film comprises an activator and these two reactive adhesive films are each present in alternation.

11. Reactive adhesive film system according to Claim 9 or 10, comprising further films, layers, adhesives, carriers, release paper and/or release liner.

12. Use of a reactive adhesive film according to any of Claims 1 to 8 and/or of a reactive adhesive film system according to any of Claims 9 to 11 for bonding materials made of metal, wood, glass and/or plastics.

13. Process for producing a reactive adhesive film according to any of Claims 1 to 8, the process comprising the following steps:
1. dissolving and/or finely distributing the ingredients in one or more solvents and/or water,
2. mixing the dissolved or finely distributed ingredients,
3. coating a release liner or release paper, a carrier material or a pressure-sensitive adhesive with the mixture of dissolved or distributed ingredients according to step 2,
4. evaporating the solvent and/or water, and
5. optionally winding up the reactive adhesive film into a roll,
where the ingredients comprise (a) a polymeric film-former matrix, (b) at least one reactive monomer, (c) a reagent selected from an initiator, more particularly a radical initiator, or an activator, and also, optionally, further additives and/or auxiliaries.

14. Kit for providing a two-component adhesive film system, comprising
(i) at least a first reactive adhesive film according to any of Claims 1 to 8, comprising a radical initiator, and
(ii) at least a second reactive adhesive film according to any of Claims 1 to 8, comprising an activator.

15. Composite element bonded by the reactive adhesive film system according to any of Claims 9 to 11 or by the kit according to Claim 14.

## Revendications

1. Film adhésif réactif comprenant (a) une matrice filmogène polymère, (b) un ou plusieurs monomères réactifs (M₍₁₎-M₍ₙ₎) et (c) un réactif, choisi parmi un amorceur, en particulier un amorceur radicalaire, ou un activateur, **caractérisé en ce que**
le ou les monomères réactifs (M₍₁₎-M₍ₙ₎) sont choisis dans les groupes (b1) à (b4) :
(b1) :
4-acryloylmorpholine, 4-méthacryloylmorpholine, acrylate de 2-hydroxy-3-phénoxy-propyle, méthacrylate de 2-hydroxy-3-phénoxy-propyle, méthylacrylate de (5-éthyl-1,3-dioxan-5-yle) ;
(b2) :
méthacrylate de 3,3,5-triméthylcyclohexyle, méthacrylate de 4-(1,1-diméthyléthyl)cyclohexyle ;
(b3) :
un méthacrylate de phénoxyéthyle polyoxyéthyléné de Formule générale (I) : 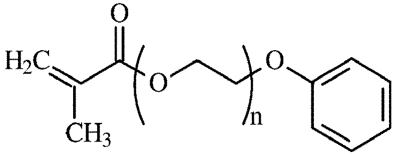 dans laquelle n = 2 à 10 ;
un méthacrylate de phénoxyéthyle polyéthoxylé une ou plusieurs fois alkylé sur le groupe phényle, de Formule générale (II) : 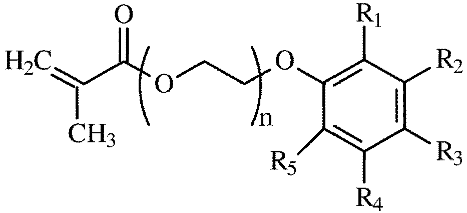 dans laquelle n = 2 à 10 ; et R₁, R₂, R₃, R₄, R₅ représentent indépendamment les uns des autres H ou un alkyle en C₁-C₁₄ ;
(b4) :
un acrylate de phénoxyéthyle polyéthoxylé de Formule générale (III) : 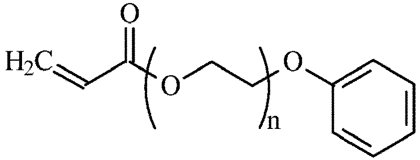 dans laquelle n = 2 à 10 ;
un acrylate de phénoxyéthyle polyéthoxylé une ou plusieurs fois alkylé sur le groupe phényle, de Formule générale (IV) : 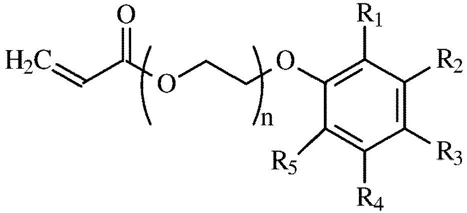
dans laquelle n = 2 à 10 ; et R₁, R₂, R₃, R₄, R₅ représentent indépendamment les uns des autres H ou un alkyle en C₁-C₁₄ ;
la proportion totale du ou des monomères réactifs (M₍₁₎-M₍ₙ₎) choisis dans les groupes (b1) à (b4), rapportée à la totalité des monomères réactifs contenus dans le film adhésif réactif, étant d'au moins 50 pour cent en poids ;
et **en ce que** la matrice filmogène polymère (a) comprend un polyuréthane thermoplastique.

2. Film adhésif réactif selon la revendication 1, **caractérisé en ce que** le ou les monomères réactifs (M₍₁₎-M₍ₙ₎) sont choisis dans les groupes (b1) à (b3), de préférence dans les groupes (b1) à (b2), plus particulièrement dans le groupe (b1), et leur proportion totale, par rapport à la totalité des monomères réactifs contenus dans le film adhésif réactif, est d'au moins 50 pour cent en poids.

3. Film adhésif réactif selon l'une des revendications 1 ou 2, **caractérisé en ce que** la proportion totale du ou des monomères réactifs (M₍₁₎-M₍ₙ₎), rapportée à la totalité des monomères réactifs contenus dans le film adhésif réactif, est d'au moins 60 pour cent en poids, de préférence d'au moins 70 pour cent en poids.

4. Film adhésif réactif selon l'une des revendications précédentes, **caractérisé en ce que** la proportion des monomères choisis dans les groupes (x1) à (x4) ci-après, rapportée à la totalité des monomères réactifs contenus dans l'adhésif réactif, est en tout inférieure à 2 pour cent en poids, de préférence inférieure à 0,2 pour cent en poids, plus particulièrement de 0 pour cent en poids, les groupes (x1) à (x4) étant chacun constitués des monomères suivants :
(x1) : acide acrylique, acrylate de méthyle, acrylate d'éthyle, acrylate de propyle, acrylate de butyle, acrylate de pentyle, acrylate d'hexyle, acide méthacrylique, méthacrylate de méthyle, méthacrylate d'éthyle, méthacrylate de propyle, méthacrylate de butyle, méthacrylate de pentyle, méthacrylate d'hexyle, chacun sous toutes les formes isomères ;
(x2) : acrylate de phényle, acrylate de benzyle, acrylates de phényle à substitution méthyle, acrylate de benzyle à substitution méthyle, méthacrylate de phényle, méthacrylate de benzyle, méthacrylates de phényle à substitution méthyle, méthacrylates de benzyle à substitution méthyle, chacun sous toutes les formes isomères ;
(x3) : acrylate d'hydroxyéthyle, acrylate d'hydroxypropyle, acrylate d'hydroxybutyle, acrylate de méthoxyéthyle, acrylate de méthoxypropyle, acrylate de méthoxybutyle, acrylate d'éthoxyéthyle, acrylate d'éthoxypropyle, acrylate d'éthoxybutyle, acrylate de phénoxyéthyle, méthacrylate d'hydroxyéthyle, méthacrylate d'hydroxypropyle, méthacrylate d'hydroxybutyle, méthacrylate de méthoxyéthyle, méthacrylate de méthoxypropyle, méthacrylate de méthoxybutyle, méthacrylate d'éthoxyéthyle, méthacrylate d'éthoxypropyle, méthacrylate d'éthoxybutyle, méthacrylate de phénoxyéthyle, chacun sous toutes les formes isomères ;
(x4) : acrylate de tétrahydrofurfuryle, méthacrylate de tétrahydrofurfuryle.

5. Film adhésif réactif selon l'une des revendications précédentes, **caractérisé en ce que** l'amorceur radicalaire comprend un peroxyde, de préférence un hydroperoxyde, plus particulièrement l'hydroperoxyde de diisopropylbenzène.

6. Film adhésif réactif selon l'une des revendications précédentes, **caractérisé en ce que** l'activateur comprend un dérivé de dihydropyridine ou un complexe d'un métal de transition, de préférence un complexe métal de transition-phtalocyanine, plus particulièrement le fer(II)-phtalocyanine.

7. Film adhésif réactif selon l'une des revendications précédentes, **caractérisé en ce qu'**il a des propriétés d'adhésif de contact.

8. Film adhésif réactif selon l'une des revendications précédentes, comprenant
(I) 10 à 90 % en poids d'une matrice filmogène polymère, 10 à 90 % en poids d'au moins un monomère réactif et 1 à 20 % en poids d'un amorceur radicalaire, de préférence 20 à 50 % en poids d'une matrice filmogène polymère, 40 à 70 % en poids d'au moins un monomère réactif et 5 à 15 % en poids d'un amorceur radicalaire ; ou
(II) 10 à 90 % en poids d'une matrice filmogène polymère, 10 à 90 % en poids d'au moins un monomère réactif et plus de 0 jusqu'à 10 % en poids d'un activateur, de préférence 20 à 50 % en poids d'une matrice filmogène polymère, 40 à 70 % en poids d'au moins un monomère réactif et 0,1 à 5 % en poids d'un activateur.

9. Système de films adhésifs réactifs comprenant deux films adhésifs réactifs selon l'une des revendications précédentes, **caractérisé en ce que** le premier film adhésif réactif contient un amorceur radicalaire et le deuxième film adhésif réactif contient un activateur.

10. Système de films adhésifs réactifs comprenant au moins deux films adhésifs réactifs selon l'une des revendications 1 à 8, **caractérisé en ce qu'**un premier film adhésif réactif contient un amorceur radicalaire et un deuxième film adhésif réactif contient un activateur, ces deux films adhésifs réactifs étant présents alternés.

11. Système de films adhésifs réactifs selon la revendication 9 ou 10, comprenant d'autres films, couches, adhésifs, supports, papiers antiadhésifs et/ou bandes antiadhésives.

12. Utilisation d'un film adhésif réactif selon l'une des revendications 1 à 8 et/ou d'un système de films adhésifs réactifs selon l'une des revendications 9 à 11 pour coller des matériaux de métal, de bois, de verre et/ou de plastiques.

13. Procédé de fabrication d'un film adhésif réactif selon l'une des revendications 1 à 8, le procédé comprenant les étapes suivantes :
1. dissolution et/ou division fine des constituants dans un ou plusieurs solvants et/ou de l'eau,
2. mélange des constituants dissous et finement divisés,
3. application du mélange de constituants dissous ou divisés selon l'étape 2 sur une bande antiadhésive ou un papier antiadhésif, un matériau support ou un adhésif de contact,
4. évaporation du solvant et/ou de l'eau et
5. éventuellement enroulement du film adhésif réactif pour former un rouleau,
les constituants comprenant (a) une matrice filmogène polymère, (b) au moins un monomère réactif, (c) un réactif choisi parmi un amorceur, en particulier un amorceur radicalaire, ou un activateur, ainsi qu'éventuellement d'autres additifs et/ou adjuvants.

14. Trousse pour préparer un système de films adhésifs bicomposant, comprenant
(i) au moins un film adhésif réactif selon l'une des revendications 1 à 8, qui contient un amorceur radicalaire, et
(ii) au moins un deuxième film adhésif réactif selon l'une des revendications 1 à 8, qui contient un activateur.

15. Corps assemblé, qui est assemblé par le système de films adhésifs réactifs selon l'une des revendications 9 à 11 ou par la trousse selon la revendication 14.
